(19) **Europäisches Patentamt European Patent Office Office européen des brevets**

(11) **EP 4 165 435 B1**

(12) **FASCICULE DE BREVET EUROPEEN**

(45) Date de publication et mention de la délivrance du brevet:
**13.12.2023 Bulletin 2023/50**

(21) Numéro de dépôt: **21773359.1**

(22) Date de dépôt: **07.09.2021**

(51) Classification Internationale des Brevets (IPC):
**G01S 13/00** *(2006.01)* **G01S 13/91** *(2006.01)*
**G01S 13/06** *(2006.01)* **G01S 13/02** *(2006.01)*
**G01S 13/87** *(2006.01)* **G01S 13/58** *(2006.01)*

(52) Classification Coopérative des Brevets (CPC):
**G01S 13/003; G01S 13/06; G01S 13/582; G01S 13/878; G01S 13/91;** G01S 2013/0245

(86) Numéro de dépôt international:
**PCT/EP2021/074553**

(87) Numéro de publication internationale:
**WO 2022/053452 (17.03.2022 Gazette 2022/11)**

(54) **SYSTÈME RADAR BI-STATIQUE OU MULTI-STATIQUE POUR LA SURVEILLANCE AÉRIENNE AVEC ILLUMINATION SPATIALE**

**BISTATISCHES ODER MULTISTATISCHES RADARSYSTEM ZUR LUFTÜBERWACHUNG MIT RÄUMLICHER BELEUCHTUNG**

**BI-STATIC OR MULTI-STATIC RADAR SYSTEM FOR AERIAL SURVEILLANCE WITH SPATIAL ILLUMINATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2020 FR 2009148**

(43) Date de publication de la demande:
**19.04.2023 Bulletin 2023/16**

(73) Titulaire: **Airbus Defence and Space SAS 31402 Toulouse Cedex 4 (FR)**

(72) Inventeurs:
• **JEANNIN, Nicolas 31402 Toulouse Cedex 4 (FR)**
• **VOULOUZAN, Frédéric 31402 Toulouse Cedex 4 (FR)**
• **BERTHEUX, Philippe 31402 Toulouse Cedex 4 (FR)**

(74) Mandataire: **Ipside 6, Impasse Michel Labrousse 31100 Toulouse (FR)**

(56) Documents cités:
**WO-A1-2019/073230**

• **J. L. BUESO BELLO ET AL: "Characteristics of TanDEM-X experimental modes", 2012 IEEE INTERNATIONAL GEOSCIENCE AND REMOTE SENSING SYMPOSIUM (IGARSS), IEEE, 22 juillet 2012 (2012-07-22), pages 1042-1045, XP032468744, DOI: 10.1109/IGARSS.2012.6350819 ISBN: 978-1-4673-1160-1**
• **KRIEGER G ET AL: "TanDEM-X: A Satellite Formation for High-Resolution SAR Interferometry", IEEE TRANSACTIONS ON GEOSCIENCE AND REMOTE SENSING, IEEE SERVICE CENTER, PISCATAWAY, NJ, US, vol. 45, no. 11, 1 novembre 2007 (2007-11-01), pages 3317-3341, XP011196204, ISSN: 0196-2892, DOI: 10.1109/TGRS.2007.900693**

EP 4 165 435 B1

## Description

### Domaine de l'invention

La présente invention appartient au domaine de la surveillance de l'espace aérien. L'invention concerne notamment un système radar bi-statique ou multi-statique pour la surveillance aérienne dont le ou les émetteurs sont embarqués dans des satellites en orbite autour de la Terre.

### Etat de la technique

Il existe différents systèmes radars pour la surveillance de l'espace aérien.

Il existe par exemple des systèmes radars mono-statiques localisés au sol qui émettent des impulsions radio et détectent le retour d'une impulsion après réflexion sur une cible. La différence de temps entre l'émission et la réception détermine la distance de la cible par rapport à l'antenne et la position de l'antenne lors de la réception de l'écho détermine l'azimut de la cible.

Il existe également des systèmes radars bi-statiques, pour lesquels l'émetteur et le récepteur sont séparés, et des systèmes radars multi-statiques comprenant plusieurs émetteurs et/ou plusieurs récepteurs distincts.

La couverture offerte par un système radar bi-statique ou multi-statique localisé au sol reste cependant limitée.

L'utilisation d'un illuminateur d'opportunité depuis l'espace (par exemple un satellite de télécommunication ou de navigation) comme émetteur d'un système radar bi-statique passif a également été étudiée. Toutefois l'utilisation d'un tel illuminateur d'opportunité présente de sévères limitations en termes de portée de détection et/ou de disponibilité des signaux à l'échelle du globe terrestre compte tenu des contraintes de couverture et de puissance de signal propre à ces applications.

Le demande de brevet WO 2019/073230 A1 divulgue un tel système radar bi-statique passif avec un illuminateur d'opportunité depuis l'espace.

### Exposé de l'invention

La présente invention a pour objectif de remédier à tout ou partie des inconvénients de l'art antérieur, notamment ceux exposés ci-avant, en proposant une solution basée sur un radar bi-statique ou multi-statique dont les émetteurs coopèrent avec les récepteurs pour mettre en oeuvre différents modes de fonctionnement permettant d'optimiser la couverture, la portée de détection ainsi que la possibilité d'empêcher un usage non autorisé du signal émis par les émetteurs.

A cet effet, et selon un premier aspect, il est proposé par la présente invention, un dispositif émetteur d'un système radar bi-statique ou multi-statique pour la surveillance aérienne. Le dispositif émetteur est destiné à être embarqué dans un satellite en orbite autour de la Terre. Ledit système radar est un système actif et le dispositif émetteur est configuré pour coopérer avec au moins un dispositif récepteur.

Lorsque le dispositif émetteur est à bord du satellite en orbite, le dispositif émetteur est configuré pour obtenir une information relative à une région d'intérêt destinée à être surveillée par au moins un dispositif récepteur du système radar et pour émettre un signal dans un faisceau radio illuminant au moins une partie de ladite région d'intérêt.

On entend par « système radar bi-statique » un radar dont l'émetteur et le récepteur sont séparés, par opposition à un radar mono-statique pour lequel l'émetteur et le récepteur sont colocalisés. On entend par « système radar multi-statique » un système radar qui comporte au moins trois composants séparés pour surveiller un espace commun, par exemple un émetteur et deux récepteurs, ou deux émetteurs et un récepteur, ou encore plusieurs émetteurs et plusieurs récepteurs.

Par « surveillance aérienne », on entend notamment qu'une cible du système radar est un aéronef (avion, hélicoptère, drone, aérostat, etc.) évoluant dans un espace aérien inférieur à 20 kilomètres d'altitude.

Le radar fonctionne dans le domaine des radiofréquences, c'est-à-dire pour des signaux dont la fréquence d'onde électromagnétique varie entre 3 kHz (kiloHertz) et 300 GHz (gigaHertz).

La « région d'intérêt » est par exemple une région géographique à la surface de la Terre. Le faisceau radio est alors orienté de telle sorte que l'empreinte au sol du faisceau couvre une partie au moins de la région d'intérêt.

Selon un autre exemple, la région d'intérêt peut être un volume dans lequel on souhaite détecter et géolocaliser une cible. Le faisceau radio est alors orienté de telle sorte que l'intersection du faisceau avec la région d'intérêt est non nulle.

Par la formule « une région d'intérêt surveillée par un dispositif récepteur du système radar », on entend que le dispositif récepteur est capable de recevoir un signal radio émis par le dispositif émetteur et réfléchi par une cible se trouvant dans le faisceau transportant le signal radio.

On entend par « faisceau radio » un cône d'illumination dans lequel l'énergie du signal émis est majoritairement focalisée. Le faisceau radio correspond par exemple au cône d'illumination correspondant à une ouverture angulaire à -3 dB pour l'antenne du dispositif émetteur (le faisceau radio est alors défini comme la région angulaire, autour de l'axe d'un lobe principal d'un diagramme d'émission pour le signal émis, dans laquelle l'énergie rayonnée est supérieure à la moitié de l'énergie rayonnée dans l'axe du lobe principal). D'autres conventions pourraient cependant être utilisées pour définir un faisceau radio.

Un dispositif récepteur du système radar bi-statique ou multi-statique peut être embarqué sur différents types de plateformes : aéronef, satellite, véhicule terrestre ou maritime, etc.

L'invention est basée sur une coordination entre les dispositifs émetteurs et les dispositifs récepteurs du système radar. En effet, un dispositif émetteur doit émettre un signal radio dans une direction particulière définie en fonction de la région d'intérêt surveillée par le ou les dispositifs récepteurs du système radar. Il s'agit donc d'un dispositif émetteur « ad hoc » pour le système radar, dans le sens où le dispositif émetteur est spécialement configuré pour focaliser l'énergie du signal radio vers une région d'intérêt que l'on souhaite surveiller. Cela exclut donc les émetteurs d'opportunité comme par exemple un satellite de télécommunications dont les signaux seraient utilisés de manière opportuniste pour faire de la surveillance avec un système radar passif. En effet, contrairement à l'objet de l'invention, les signaux émis par un satellite de télécommunications sont transportés dans des faisceaux orientés pour illuminer des régions prédéterminées afin de leur apporter des services de télécommunications, et ces faisceaux ne sont pas volontairement orientés vers des régions pour lesquelles on souhaite opérer une surveillance radar. Autrement dit, les faisceaux radio générés par un satellite de télécommunications sont orientés pour répondre à une mission de télécommunication, et non pas à une mission de surveillance aérienne, ce qui entraine une dilution du flux de puissance au sol et par conséquent une moindre utilité pour la détection de cibles.

Le dispositif émetteur doit donc recevoir une information relative à la région d'intérêt pour orienter un faisceau radio de telle sorte qu'il illumine au moins partiellement la région d'intérêt. Cette information peut correspondre à des coordonnées géographiques de la région d'intérêt, à une direction que doit suivre un faisceau pour illuminer la région d'intérêt, ou bien à des paramètres de configuration d'un système antennaire du dispositif émetteur pour produire un faisceau qui illumine la région d'intérêt. Le ou les dispositifs récepteurs du système radar doivent également connaître la région d'intérêt illuminée.

L'invention présente les avantages inhérents au caractère bi-statique ou multi-statique du radar, à savoir notamment la possibilité de détecter des objets dont la géométrie limite les retours dans une configuration mono-statique.

L'invention permet également de disposer d'une capacité de surveillance garantie en tout point du globe sans avoir à déployer des émetteurs localisés au sol ou dans l'atmosphère.

L'invention permet également de détecter des cibles évoluant à très faible altitude, ce qui n'est généralement pas le cas pour des radars de surveillance aérienne localisés au sol à cause de l'absence de ligne de visée directe entre la cible et le radar du fait de la courbure de la Terre.

L'invention permet d'obtenir des portées de détection importantes liées à une capacité de focalisation de l'énergie vers une région d'intérêt particulière.

La coopération entre le dispositif émetteur et le dispositif récepteur permet également d'empêcher l'exploitation des signaux émis par le dispositif émetteur par des tiers.

En résumé, l'utilisation d'un dispositif émetteur qui fonctionne en coopération avec un dispositif récepteur d'un système radar bi-statique ou multi-statique permet la mise en oeuvre de différents modes de fonctionnement permettant d'optimiser la flexibilité de couverture, la portée de détection, ainsi que la possibilité de prévenir un usage non autorisé du signal.

Il convient de noter que la coordination entre un dispositif émetteur et un dispositif récepteur du système radar selon l'invention permet d'assurer l'utilisation d'une base de temps et de fréquence commune entre ces deux entités (on entend par là que l'instant d'émission du signal et la fréquence à laquelle le signal est émis par le dispositif émetteur est connu a priori par le dispositif récepteur). Cette synchronisation en temps et en fréquence entre un dispositif émetteur et un dispositif récepteur n'est cependant pas toujours nécessaire, notamment dans le cas où la localisation de la cible repose sur une mesure de différence de temps de propagation du signal entre plusieurs dispositifs récepteurs.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la forme d'onde du signal émis est générée directement à bord du satellite de manière autonome.

Autrement dit il ne s'agit pas d'un signal émis par une station au sol et répété par le dispositif émetteur embarqué dans le satellite.

Dans des modes particuliers de réalisation, lorsqu'un faisceau radio émis par le dispositif émetteur ne peut pas illuminer entièrement la région d'intérêt, le dispositif émetteur est configuré pour illuminer successivement différentes sous-régions de la région d'intérêt.

De telles dispositions permettent de rechercher une cible avec le dispositif émetteur sur une région d'intérêt plus vaste que la région couverte par un faisceau radio généré par le dispositif émetteur.

Dans des modes particuliers de réalisation, le dispositif émetteur comporte une antenne à réseau phasé et un réseau de formation de faisceau configuré pour repointer un faisceau radio émis par le dispositif émetteur selon différentes directions. Le dispositif émetteur peut éventuellement comporter en outre un réflecteur destiné à être illuminé par le réseau phasé positionné à proximité du foyer focal dudit réflecteur.

Une antenne à réseau phasé (repointage électronique) permet en effet de repointer un faisceau plus rapidement qu'une antenne à repointage mécanique. Cela confère donc une meilleure réactivité au système. Cela peut notamment permettre d'orienter en continu le faisceau pour maintenir l'illumination d'une région d'intérêt pendant le temps de survol de ladite région par le satellite. Cela peut également permettre d'illuminer intégralement la région d'intérêt de façon rapide avec une séquence de faisceaux différents.

Dans des modes particuliers de réalisation, le signal émis est une combinaison d'un signal utile avec un signal parasite, ledit signal parasite étant décorrélé du signal utile et présentant une fonction d'ambiguïté avec un lobe principal d'une largeur dans le domaine fréquentiel supérieure à deux fois le décalage fréquentiel Doppler maximal susceptible d'être observé pour une cible visée par le système radar.

De telles dispositions permettent de limiter très fortement l'usage par un tiers du signal émis. Seul un dispositif récepteur autorisé qui a connaissance du signal utile et/ou du signal parasite pourra alors détecter et géolocaliser une cible à partir du signal réfléchi par la cible.

Pour rappel, la fonction d'ambiguïté (telle qu'étudiée par Woodward dans « *Probability and Information Theory with Applications to Radar* »), est un outil essentiel de la théorie de la détection en radar qui caractérise les propriétés du signal comme instrument de mesure. La fonction d'ambiguïté d'un signal complexe peut être définie comme une distance entre ce signal et le même signal altéré par l'action d'un opérateur de translation en temps et en fréquence.

Dans des modes particuliers de réalisation, le signal parasite est un signal « chirp » présentant une fréquence variant linéairement autour d'une fréquence centrale pendant une période prédéterminée avec un changement aléatoire de la fréquence centrale d'une période à l'autre.

Dans des modes particuliers de réalisation, la largeur de bande balayée par le signal « chirp » pendant ladite période prédéterminée est supérieure à deux fois le décalage fréquentiel Doppler maximal susceptible d'être observée pour une cible visée par le système radar.

De telles dispositions permettent de s'assurer que des échos parasites en retour du sol contamineront nécessairement le signal réfléchi par la cible. Un récepteur appartenant au système radar et connaissant le signal utile ou le signal parasite sera capable de supprimer ces échos parasites par un traitement du signal adapté. En revanche, un récepteur n'appartenant pas au système radar et ne connaissant par conséquent ni le signal utile ni le signal parasite ne sera pas en mesure de supprimer ces échos parasites.

Selon un deuxième aspect, la présente invention concerne un système radar bi-statique ou multi-statique pour la surveillance aérienne d'une région d'intérêt, ledit système radar visant à géolocaliser un aéronef dans ladite région d'intérêt. Le système radar comprend :

- au moins un dispositif émetteur selon l'un des modes de réalisation précédents, chaque dispositif émetteur étant configuré (lorsque le dispositif émetteur est à bord du satellite en orbite) pour émettre un signal dans un faisceau radio illuminant au moins une partie de ladite région d'intérêt,
- au moins un dispositif récepteur destiné à être positionné pour surveiller ladite région d'intérêt.

L'invention est basée sur une coopération entre les dispositifs émetteurs et les dispositifs récepteurs du système radar. En effet, un dispositif émetteur émet un signal radio dans une direction particulière définie en fonction de la région d'intérêt surveillée par le ou les dispositifs récepteurs du système radar.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le système radar est un système radar multi-statique comportant plusieurs dispositifs émetteurs et/ou plusieurs dispositifs récepteurs.

La diversité spatiale d'un système radar multi-statique permet d'améliorer les capacités de détection et de géolocalisation du système. La possibilité de disposer, de différents angles d'observation permet notamment de multiplier les chances d'observer la cible sous une géométrie dans laquelle la surface équivalent radar (SER) est importante, compte tenu du caractère fortement anisotrope des cibles d'intérêt.

Dans des modes particuliers de réalisation, le système radar comporte plusieurs dispositifs émetteurs, et les différents dispositifs émetteurs sont embarqués dans des satellites organisés en constellations de manière à ce que pour une région d'intérêt quelconque à la surface de la Terre, il existe toujours une ligne de visée directe vers ladite région d'intérêt pour plusieurs desdits satellites.

Dans des modes particuliers de réalisation, le ou les dispositifs émetteurs et/ou le ou les dispositifs récepteurs sont en outre configurés pour communiquer via un réseau de télécommunications par satellite pour échanger des données entre deux dispositifs émetteurs, entre deux dispositifs récepteurs, entre un dispositif émetteur et un dispositif récepteur, entre une station de contrôle au sol et un dispositif émetteur, ou entre une station de contrôle au sol et un dispositif récepteur.

Dans ce but, le ou les dispositifs émetteurs et/ou le ou les dispositifs récepteurs comportent un module de communication adapté pour établir des liens de communication avec le réseau de télécommunications par satellite. De telles dispositions permettent d'envisager une couverture mondiale par le système radar. Il convient de noter que le réseau de télécommunications par satellite peut être distinct du système radar selon l'invention.

Selon un troisième aspect, la présente invention concerne un procédé pour la surveillance aérienne à l'aide d'un système radar bi-statique ou multi-statique. Le système radar comporte au moins un dispositif émetteur embarqué dans un satellite en orbite autour de la Terre et au moins un dispositif récepteur, ledit au moins un dispositif émetteur étant configuré pour coopérer avec ledit au moins un dispositif récepteur.

Le procédé comporte les étapes suivantes :

- une détermination d'une région d'intérêt dans laquelle on souhaite détecter et géolocaliser un aéronef,
- un positionnement dudit dispositif récepteur pour surveiller ladite région d'intérêt,
- une communication au dispositif émetteur d'une information relative à ladite région d'intérêt,
- une émission, par ledit dispositif émetteur, d'un signal dans un faisceau radio illuminant au moins une partie de ladite région d'intérêt,
- une estimation de la position de l'aéronef dans la région d'intérêt à partir d'un signal reçu par le dispositif récepteur correspondant à la réflexion sur l'aéronef du signal émis par le dispositif émetteur.

Par « positionnement du dispositif récepteur pour surveiller ladite région d'intérêt », on entend que le dispositif récepteur est placé dans la région d'intérêt ou suffisamment proche de la région d'intérêt pour qu'il puisse recevoir le signal émis par le dispositif émetteur et réfléchi par une cible se trouvant dans le faisceau radio transportant ledit signal. Aussi, un système antennaire du dispositif récepteur est configuré pour recevoir ce signal.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, lorsqu'un faisceau radio émis par un dispositif émetteur ne peut pas illuminer entièrement la région d'intérêt, le procédé comporte en outre la détermination d'une séquence d'illumination de différentes sous-régions de la région d'intérêt pour ledit dispositif émetteur.

Dans des modes particuliers de mise en oeuvre, l'émission du signal radio comporte une combinaison d'un signal parasite avec un signal utile, ledit signal parasite étant décorrélé du signal utile et présentant une fonction d'ambiguïté avec un lobe principal d'une largeur dans le domaine fréquentiel supérieure à deux fois le décalage fréquentiel Doppler maximal susceptible d'être observé pour une cible visée par le système radar.

Dans des modes particuliers de mise en oeuvre, le système radar est un système radar multi-statique comportant un nombre $N_E$ de dispositifs émetteurs et un nombre $N_R$ de dispositifs récepteurs, où $N_E$ et $N_R$ sont des entiers naturels positifs, dans lequel un nombre $N_E.N_R$ de configurations bi-statiques disponibles est supérieur ou égal à deux.

Dans des modes particuliers de mise en oeuvre, le nombre $N_R$ de dispositifs récepteurs est supérieur ou égal à deux et l'estimation de la position de l'aéronef comporte une mesure de différence de temps d'arrivée du signal reçu par chaque dispositif récepteur.

De telles dispositions permettent de limiter les besoins de synchronisation entre émetteurs et récepteurs. En effet, il n'y a alors pas besoin d'une synchronisation en temps et en fréquence entre un émetteur et un récepteur, et seuls les différents récepteurs doivent être synchronisés entre eux pour effectuer des mesures de type TDOA (« Time Différence Of Arrival »). Aussi, il n'est pas nécessaire dans ce cas pour les récepteurs de connaître la position du ou des émetteurs.

Dans des modes particuliers de mise en oeuvre, le nombre $N_E$ de dispositifs émetteurs est supérieur ou égal à deux et l'estimation de la position de l'aéronef pour un dispositif récepteur comprend une détermination d'au moins deux scores de détection associés respectivement à au moins deux dispositifs émetteurs, et les scores de détection sont projetés dans une géométrie commune puis cumulés.

Dans des modes particuliers de mise en oeuvre, une décision sur l'estimation de la position de l'aéronef repose sur une combinaison de décisions élémentaires correspondant respectivement à différentes configurations bi-statiques parmi les $N_E.N_R$ configurations bi-statiques disponibles.

De telles dispositions permettent d'améliorer la sensibilité de détection et la précision de géolocalisation d'une cible

Dans des modes particuliers de mise en oeuvre, le procédé comporte en outre une étape d'organisation des différents satellites embarquant respectivement les différents dispositifs émetteurs en constellations de telle sorte que, pour une région d'intérêt quelconque à la surface de la Terre, il existe toujours une ligne de visée directe vers ladite région d'intérêt pour plusieurs desdits satellites.

Dans des modes particuliers de mise en oeuvre, un réseau de télécommunications par satellite permet en outre un échange de données entre deux dispositifs émetteurs, entre deux dispositifs récepteurs, entre un dispositif émetteur et un dispositif récepteur, entre une station de contrôle au sol et un dispositif émetteur, ou entre une station de contrôle au sol et un dispositif récepteur.

**Présentation des figures**

L'invention sera mieux comprise à la lecture de la description suivante, donnée à titre d'exemple nullement limitatif, et faite en se référant aux figures 1 à 18 qui représentent :

[Fig. 1] une représentation schématique d'un système radar bi-statique selon l'invention,
[Fig. 2] une représentation schématique d'un système radar multi-statique selon l'invention,
[Fig. 3] une représentation schématique de l'utilisation d'une séquence d'illumination pour illuminer une région d'intérêt,
[Fig. 4] une représentation schématique d'un mode de réalisation d'un dispositif émetteur selon l'invention,
[Fig. 5] une représentation schématique d'un autre mode de réalisation d'un dispositif émetteur selon l'invention,
[Fig. 6] une représentation schématique d'un mode de réalisation d'un dispositif récepteur,
[Fig. 7] une représentation schématique d'un module de filtrage adaptatif pour diminuer la contribution des interférences dans un signal reçu par un dispositif récepteur,
[Fig. 8] une représentation schématique d'un module de traitement spatio-temporel pour mettre en oeuvre un filtrage adaptatif dans le domaine fréquence Doppler / fréquence spatiale.
[Fig. 9] une représentation schématique du principe d'un filtrage bidimensionnel de type STAP dans le domaine fréquence Doppler / fréquence spatiale,
[Fig. 10] une illustration de l'avantage de disposer de deux configurations différentes de mesure basées sur deux dispositifs émetteurs différents dans le cas d'un filtrage bidimensionnel de type STAP dans le domaine fréquence Doppler / fréquence spatiale,
[Fig. 11] une représentation schématique d'un mode particulier de mise en oeuvre d'une estimation de la position d'une cible par une unité de détection et de localisation du dispositif récepteur,
[Fig. 12] une représentation schématique du principe de cumul de scores de détection associés respectivement à des dispositifs émetteurs différents,
[Fig. 13] une représentation d'un spectrogramme d'un signal « chirp » linéaire avec une fluctuation aléatoire de la fréquence centrale au cours du temps,
[Fig. 14] une représentation d'une fonction d'auto-ambigüité pour un signal utile (partie a) et pour un signal parasite (partie b) ; une représentation d'une fonction d'ambigüité calculée respectivement par un dispositif récepteur n'appartenant pas au système (partie c) et par un dispositif récepteur appartenant au système (partie d) lorsque le signal émis est protégé par un signal parasite.
[Fig. 15] une représentation schématique de l'utilisation d'un réseau de télécommunications par satellite pour échanger des données entre différentes entités du système radar selon l'invention,
[Fig. 16] une représentation schématique d'un premier exemple de mise en oeuvre de l'invention,
[Fig. 17] un graphique représentant différents points de fonctionnement du premier exemple décrit en référence à la figure 12,
[Fig. 18] une représentation schématique des principales étapes d'un procédé de surveillance aérienne à l'aide d'un système radar bi-statique ou multi-statique selon l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée d'un mode de réalisation de l'invention**

A) Description du système radar

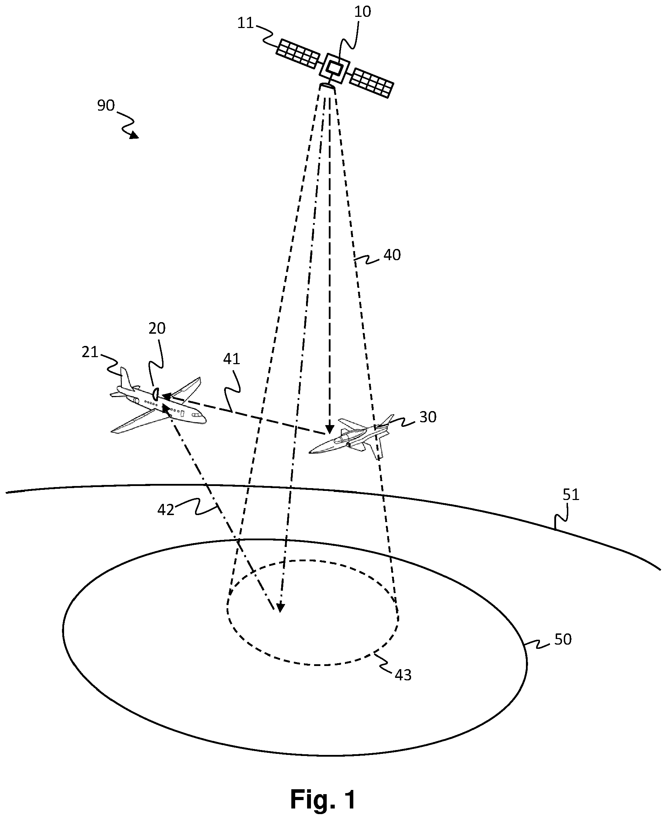

La figure 1 représente schématiquement un exemple d'un système radar 90 bi-statique selon l'invention. La cible 30 visée par le système radar 90 est un aéronef. Le système radar 90 comporte un dispositif émetteur 10 embarqué dans un satellite 11 en orbite autour de la Terre, et un système récepteur 20. Dans l'exemple illustré sur la figure 1, le dispositif émetteur 20 est embarqué dans un avion 21. Rien n'empêche cependant que, dans des variantes de l'invention, le dispositif récepteur 20 soit embarqué dans un autre type de plate-forme, comme par exemple un satellite, un véhicule terrestre ou un navire.
Le dispositif émetteur 10 correspond à la charge utile, ou à une partie au moins de la charge utile du satellite 11 dans lequel il est embarqué.

Le dispositif émetteur 10 et le dispositif récepteur 20 sont coordonnées l'un avec l'autre pour coopérer. On entend par là notamment que le dispositif émetteur 10 est spécialement configuré pour focaliser l'énergie d'un signal radio émis par ledit dispositif émetteur 10 vers une région d'intérêt 50 surveillée par le dispositif récepteur 20. Dans ce but, le dispositif émetteur 10 est configuré pour obtenir une information relative à la région d'intérêt 50 et pour orienter un faisceau radio 40 de telle sorte qu'il illumine au moins partiellement la région d'intérêt. D'autre part, le dispositif récepteur 20 est volontairement positionné à proximité de la région d'intérêt 50 dans laquelle on souhaite détecter et géolocaliser une cible 30 de telle façon que le dispositif récepteur 20 soit capable de recevoir un signal 41 émis par le dispositif émetteur 10 et réfléchi par la cible 30.

Sur la figure 1, la région d'intérêt 50 est représentée par une région géographique à la surface 51 de la Terre. Le faisceau radio 40 est alors orienté de telle sorte que l'empreinte au sol 43 du faisceau radio 40 couvre une partie au moins de la région d'intérêt 50. La région d'intérêt pourrait cependant aussi correspondre à un volume dans lequel on souhaite détecter et géolocaliser une cible. Le faisceau radio est alors orienté de telle sorte que l'intersection du faisceau avec la région d'intérêt est non nulle.

L'information sur la région d'intérêt 50 qu'il convient de surveiller peut par exemple être transmise au dispositif émetteur 10 et au dispositif récepteur 20 par une station de contrôle au sol (non représentée sur la figure 1). Selon un autre exemple, l'information sur la région d'intérêt 50 qu'il convient de surveiller peut être transmise au dispositif récepteur 20 par le dispositif émetteur 10. Selon encore un autre exemple, l'information sur la région d'intérêt 50 qu'il convient de surveiller peut être transmise au dispositif émetteur 10 par le dispositif récepteur 20.

Le dispositif récepteur 20 cherche alors à détecter un écho engendré par la réflexion du signal 41 sur la cible 30 en recherchant des répliques du signal émis décalées en temps et en fréquences dans le signal reçu par le dispositif récepteur 20.

Dans l'exemple considéré et illustré sur la figure 1, le dispositif émetteur 10 et le dispositif récepteur 20 sont synchronisés en temps et en fréquence (ils utilisent une base de temps et de fréquence commune). Aussi, le dispositif récepteur 20 a connaissance du contenu et de l'instant d'émission du signal 41. Le dispositif récepteur comporte par exemple une mémoire électronique dans laquelle est mémorisé des paramètres nécessaires à la génération d'une réplique de référence du signal émis par le dispositif émetteur 10. Un calcul d'une fonction d'ambiguïté entre cette réplique de référence et le signal reçu peut alors permettre de détecter et de géolocaliser la cible 30. En effet, les décalages en temps et en fréquence du signal 41 réfléchi par la cible 30 par rapport au signal émis par le dispositif émetteur 10 sont représentatifs de la position de la cible 30 par rapport au dispositif émetteur 10 et au dispositif récepteur 20.

La capacité de détection d'une cible peut être estimée à partir du rapport signal à bruit $SNR_R$ (acronyme de « Signal to Noise Ratio ») du signal reçu par le dispositif récepteur 20. Ce rapport signal à bruit $SNR_R$ peut être quantifié par le biais de l'équation radar ci-dessous :

[Math. 1]

$$SNR_R = \frac{P_t \, G_t \, G_r \, t_{int} \, \lambda^2 \, \sigma}{(4\pi)^3 \, k_B \, T_0 \, F_R \, L \, d_E^2 \, d_R^2}$$

dans laquelle :

- $\sigma$ est la Surface Equivalente Radar (SER),
- $P_t$ est la puissance moyenne d'émission,
- $G_t$ est le gain d'antenne à l'émission dans la direction de la cible,
- $G_r$ est le gain d'antenne à la réception dans la direction de la cible,
- $\lambda$ est la longueur d'onde,
- $T_0$ est la température de bruit de référence usuellement prise égale à 290K,
- $F_R$ est le facteur de bruit de la chaîne de réception,
- $d_E$ est la distance entre l'émetteur et la cible,
- $d_R$ est la distance entre la cible et le récepteur (portée de détection),
- $L$ représentes les pertes du système (propagation, traitement, impact des interférences),
- $t_{int}$ est la durée d'intégration de la mesure,
- $K_B$ est la constante de Boltzmann.

Il est à noter que les niveaux de puissance reçue pour un signal directement reçu du dispositif émetteur 10 et/ou pour des signaux 42 en provenance du dispositif émetteur et réfléchis par la surface 51 de la Terre peuvent être de plusieurs ordres de magnitude supérieurs au signal 41 réfléchi par la cible 30. Ces signaux peuvent alors nuire à la capacité de détection de la cible 30. Néanmoins, l'interférence due au signal direct et aux signaux réfléchis par le sol peut, sous certaines conditions, être très fortement diminuée par l'utilisation de techniques de traitement du signal qui seront détaillées par la suite. Sous cette hypothèse, les performances de détection peuvent être évaluées en testant la capacité à discriminer le signal d'intérêt du bruit thermique de réception et du niveau d'interférence résiduel.

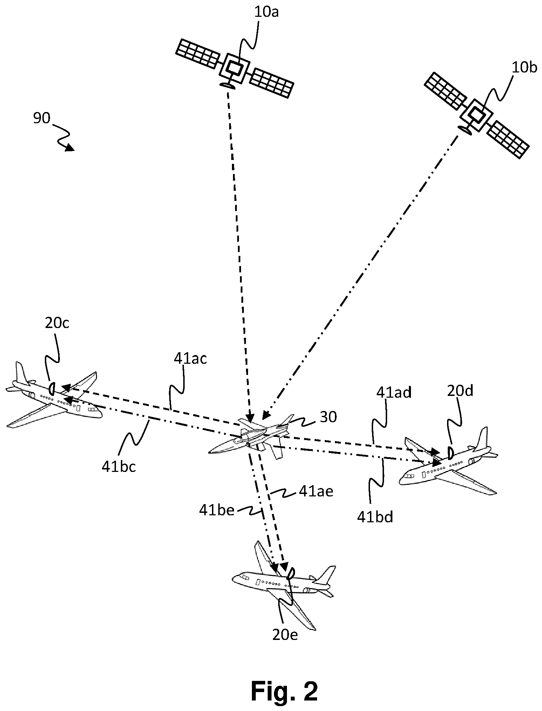

Tel qu'illustré sur la figure 2, le système radar 90 peut être un système radar multi-statique comportant plusieurs dispositifs émetteurs 10 et/ou plusieurs dispositifs récepteurs 20 pour sonder une région d'intérêt à un instant donné. De telles dispositions permettent d'améliorer les capacités de détection par diversité d'émission et/ou diversité de réception. Dans l'exemple illustré à la figure 2, le système radar 90 comporte deux ($N_E$ = 2) dispositifs émetteurs 10a, 10b et trois ($N_R$ = 3) dispositifs récepteurs 20c, 20d, 20e. Cela permet ainsi de multiplier les configurations de détection, et ainsi les capacités de détection du système, en réalisant $N_E.N_R$ opérations bi-statiques ($N_E.N_R$ = 6 dans l'exemple de la figure 2).

Différents modes de traitement simultanés peuvent être mis en jeu, permettant d'augmenter la fréquence de revisite d'une sous-région de la région d'intérêt à surveiller et/ou d'augmenter la sensibilité de détection en combinant les observables issus des différentes configurations bi-statiques disponibles. Tel qu'illustré sur la figure 2, un premier récepteur 20c reçoit un signal 41ac émis par un premier dispositif émetteur 10a et réfléchi par la cible 30 ainsi qu'un signal 41bc émis par un deuxième dispositif émetteur 10b et réfléchi par la cible 30 ; un deuxième récepteur 20d reçoit un signal 41ad émis par le premier dispositif émetteur 10a et réfléchi par la cible 30 ainsi qu'un signal 41bd émis par le deuxième dispositif émetteur 10b et réfléchi par la cible 30 ; un troisième récepteur 20e reçoit un signal 41ae émis par le premier dispositif émetteur 10a et réfléchi par la cible 30 ainsi qu'un signal 41be émis par le deuxième dispositif émetteur 10b et réfléchi par la cible 30.

### B) Dispositif émetteur

Dans l'invention, les dispositifs émetteurs 10 sont destinés à être embarqués dans des satellites pour être localisés dans l'espace exo-atmosphérique afin de pouvoir illuminer une ou plusieurs régions d'intérêt situées au voisinage du globe terrestre. Tout type d'orbite peut être considéré pour les satellites transportant les dispositifs émetteurs 10 : de l'orbite basse (à partir de 300 kilomètres d'altitude) jusqu'à des orbites de type géostationnaire.

Pour permettre des performances de détection satisfaisantes, un dispositif émetteur 10 devra comporter une antenne présentant un fort gain $G_t$ et donc une directivité importante. L'empreinte au sol 43 de cette antenne et donc la région dans laquelle elle assure une capacité de détection intéressante est possiblement plus réduite que la région d'intérêt 50 (tel qu'illustré sur la figure 1). Dans un tel cas, il convient que le dispositif émetteur 10 soit configuré pour pouvoir balayer rapidement la région d'intérêt 50 avec un faisceau radio 40 en orientant successivement ledit faisceau radio 40 selon différentes directions pour couvrir successivement différentes sous-régions constitutives de la région d'intérêt 50.

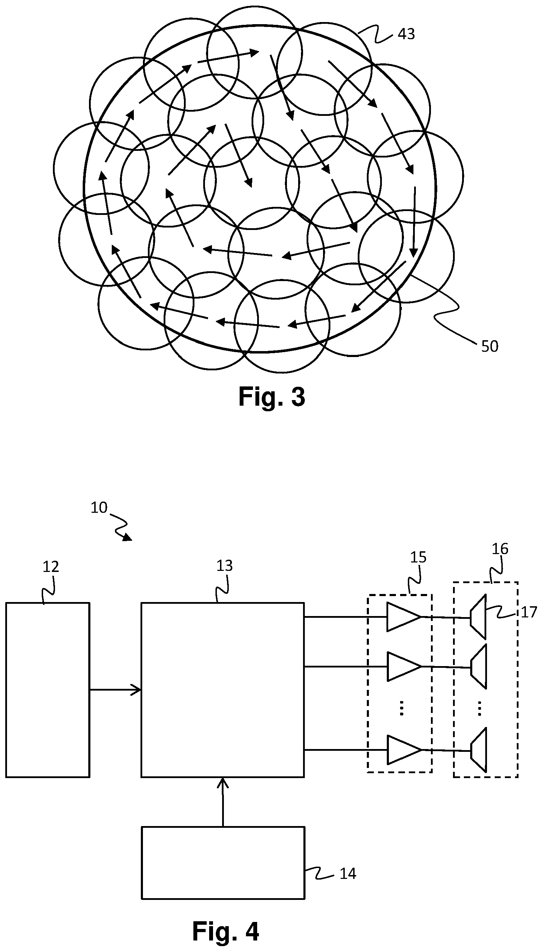

Tel qu'illustré sur la figure 3, il est possible de déterminer une séquence d'illumination pour un dispositif émetteur 10. La séquence d'illumination comporte par exemple plusieurs directions de l'axe principal du faisceau radio 40 à appliquer successivement pour couvrir l'intégralité de la région d'intérêt 50 avec les sous-régions 43 séquentiellement illuminées. La séquence d'illumination peut être déterministe ou pseudo-aléatoire. Avantageusement, la séquence d'illumination peut être connue du dispositif récepteur pour éviter une recherche inutile de cibles dans des régions non illuminées. Dans un tel cas, le dispositif émetteur 10 peut par exemple être configuré pour communiquer au dispositif récepteur 20 la séquence d'illumination effectuée. Alternativement, la séquence d'illumination à effectuer peut être transmise à la fois au dispositif récepteur 20 et au dispositif émetteur 10 par une station de contrôle au sol.

Il peut également être avantageux que différents dispositifs émetteurs 10 soient synchronisés entre eux pour suivre simultanément une même séquence d'illumination. De telles dispositions permettent en effet de favoriser la diversité d'émission.

Indépendamment de la séquence d'illumination, il est préférable de pouvoir orienter de façon continue un faisceau radio 40 produit par un dispositif émetteur 10 pour maintenir l'illumination d'une région d'intérêt pendant le temps de survol de ladite région par le satellite (défilement du satellite par rapport à la Terre lorsque le satellite n'est pas un satellite géostationnaire).

Dans ce but, le dispositif émetteur 10 peut comporter une antenne repointable de façon mécanique ou de façon électronique avec ou sans réflecteur. Pour permettre ce repointage rapide en diverses circonstances l'utilisation d'une antenne à réseau phasé (repointage électronique) est à privilégier par rapport à une antenne à repointage mécanique pour des questions liées à la réactivité du système.

Le repointage d'un faisceau radio 40 est commandé par une unité de contrôle du dispositif émetteur 10 en fonction d'une information sur la région d'intérêt 50 à surveiller. Cette information peut par exemple être transmise par une station de contrôle au sol. Cette information peut par exemple correspondre à un ensemble de poids à appliquer à différentes entrées d'un réseau de formation de faisceau (BFN pour « Beam Forming Network » dans la littérature anglo-saxonne). Selon un autre exemple, cette information peut correspondre à une direction (ou à une séquence de directions) que doit suivre le faisceau radio 40, les poids à appliquer au niveau du réseau de formation de faisceau étant alors calculés par l'unité de contrôle du dispositif émetteur 10. Selon encore un autre exemple, cette information peut correspondre aux coordonnées géographiques de la région d'intérêt, et le dispositif émetteur 10 est alors responsable de calculer une séquence d'illumination ainsi que les poids à appliquer au niveau du réseau de formation pour effectuer ladite séquence.

Le signal émis par le dispositif émetteur 10 peut être un signal reçu d'une station au sol et répété par le dispositif émetteur 10 (de manière analogue à ce qui est réalisé par un satellite de télécommunication en mode transparent). Alternativement, et de manière préférentielle, la forme d'onde du signal émis par le dispositif émetteur 10 est générée directement par le dispositif émetteur 10 à bord du satellite 11, de manière autonome.

Dans le cas d'un signal généré directement et de façon autonome à bord du satellite 11 par le dispositif émetteur 10, il est possible de commander la forme d'onde du signal à émettre via une interface de télécommande. Un générateur de forme d'onde du dispositif émetteur 10 est par exemple initialisé par une station au sol via un canal de communication sécurisé. Dans certains modes de mise en oeuvre, la méthode de génération de la forme d'onde est partagée entre le dispositif émetteur 10 et le dispositif récepteur 20 de sorte à minimiser les quantités d'information à échanger pour qu'ils soient coordonnés.

La figure 4 représente schématiquement un exemple de réalisation d'un dispositif émetteur 10 selon l'invention comportant un générateur de forme d'onde 12, un réseau de formation de faisceau 13, une unité de contrôle 14, un étage d'amplification 15 et une antenne 16 à réseau phasé comportant une pluralité d'éléments antennaires 17. Le générateur 12 de forme d'onde peut être contrôlé par un signal de synchronisation provenant d'un système de distribution de temps comme par exemple un système de navigation par satellite (GNSS pour « Global Navigation Satellite System ») ou d'une horloge ultra-stable (horloge atomique par exemple). L'unité de contrôle 14 calcule les coefficients complexes (poids) à appliquer aux différents éléments antennaires par le réseau de formation de faisceau 13. Dans l'exemple illustré à la figure 4, un signal émis par le dispositif émetteur 10 est généré directement à bord du satellite de manière autonome.

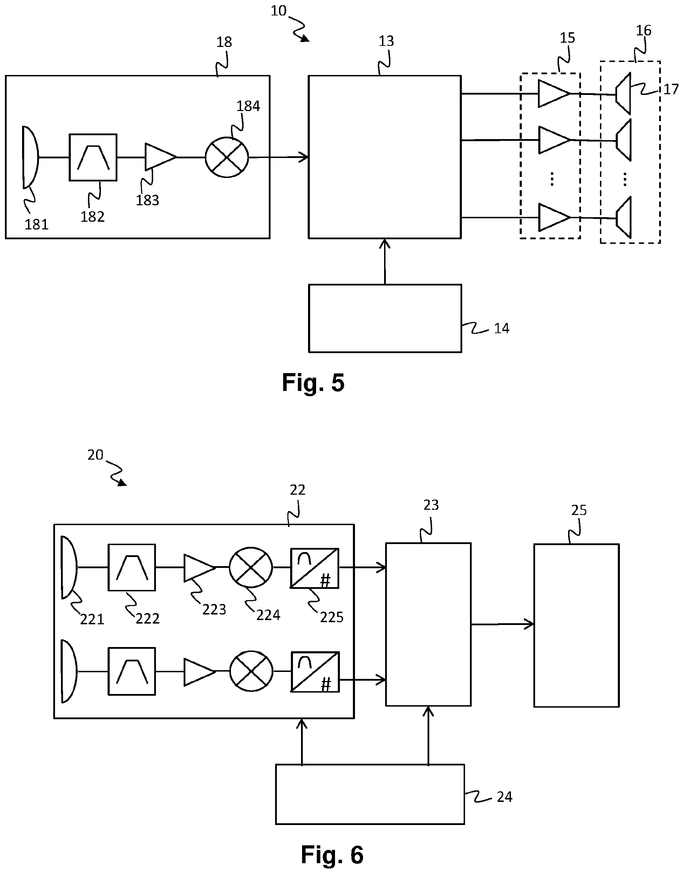

La figure 5 représente schématiquement un autre exemple de réalisation d'un dispositif émetteur 10 selon l'invention pour lequel un signal émis par le dispositif émetteur 10 est une répétition d'un signal reçu d'une station au sol. Le dispositif émetteur 10 ne comporte pas de générateur de forme d'onde. En revanche, le dispositif émetteur 10 comporte une chaîne de réception 18 pour recevoir le signal émis par la station au sol et pour réémettre ledit signal après amplification et transposition en fréquence. Dans ce but, la chaîne de réception 18 comporte, de manière conventionnelle, une antenne de réception 181, un filtre 182, un amplificateur 183 et un convertisseur de fréquence 184. Pour le reste, le dispositif émetteur 10 illustré à la figure 5 est identique au dispositif émetteur 10 décrit en référence à la figure 4.

Un dispositif émetteur 10 selon l'invention comporte également une mémoire électronique dans laquelle est mémorisée l'information relative à la région d'intérêt 50 à surveiller permettant d'orienter convenablement un faisceau radio 40 généré par le dispositif émetteur (par exemple des coordonnées géographiques de la région d'intérêt 50, une séquence d'illumination ou des paramètres de configuration du réseau de formation de réseau). Le dispositif émetteur 10 peut également comporter un module de communication (non représenté sur les figures) pour échanger des informations avec une station de contrôle au sol, avec un dispositif récepteur 20 et/ou avec un autre dispositif émetteur 10.

Il peut être avantageux pour le positionnement des cibles que le dispositif émetteur 10 soit muni d'un dispositif de détermination d'orbite précis afin de transmettre ses éphémérides et des informations sur le temps local à une station au sol de coordination, ou de transmettre ces informations comme modulation secondaire dans le signal radar à destination des dispositifs récepteurs 20.

Préférentiellement, les différents dispositifs émetteurs 10 du système ne doivent pas s'interférer. Un mécanisme de partage du spectre basé sur une séparation non exclusive de fréquence, de code, de temps ou de polarisation peut être mis en place.

Les satellites embarquant les différents dispositifs émetteurs 10 peuvent être organisés en constellations de manière à ce qu'il existe toujours une ligne de visée directe pour plusieurs satellites vers une région d'intérêt quelconque à proximité de la surface de la Terre. Différents exemples de ce type de constellations peuvent être trouvés sur des constellations existantes ou en projet de satellites de télécommunication en orbite basse, de systèmes de positionnement par satellite, ou de satellites d'observation de la Terre.

B) Dispositif récepteur

La figure 6 représente schématiquement un exemple de dispositif récepteur 20 du système radar 90 selon l'invention. Le dispositif récepteur 20 est en charge de détecter un signal réfléchi par une cible et de le discriminer du bruit thermique et des interférences. Ces interférences peuvent être issues du signal direct, du fouillis de sol (échos parasites réfléchis par le sol), ou des interférences intentionnelles (brouillage).

Le dispositif récepteur 20 comporte une chaîne de réception 22 pouvant comporter une ou plusieurs voies de réceptions constituées chacune, de façon conventionnelle, d'un système antennaire 221 éventuellement repointable mécaniquement ou électroniquement, d'une partie analogique permettant le filtrage 222, l'amplification 223, la conversion de fréquence 224 et la numérisation 225 des signaux.

Il peut exister dans la chaîne de réception 22 une voie de référence configurée pour recevoir un signal provenant directement du dispositif émetteur 10 (sans réflexion sur une cible ou sur le sol). Une telle voie de référence peut être utilisée à des fins de suppression analogique du signal direct, et/ou à des fins d'aide à la synchronisation en temps et en fréquence du dispositif récepteur 20 et/ou à des fins de suppression numérique du signal direct.

Les flux numériques obtenus sont envoyés vers une unité de traitement de signal 23 dont les opérations visent à limiter les effets de masquage par des interférences du signal réfléchi par une cible.

Une unité de synchronisation 24 est responsable de fournir un signal de synchronisation. Cette synchronisation en temps et en fréquence peut être obtenue à partir de la réception sur la voie de référence du signal émis directement par le dispositif émetteur 10 à une fréquence et à un instant d'émission connus par le dispositif récepteur 20. Selon d'autres exemples, la synchronisation peut être obtenue à l'aide d'un système de distribution de temps comme un système de positionnement par satellite ou bien à l'aide d'une horloge ultra-stable).

L'unité de synchronisation 24 peut également être responsable de fournir à l'unité de traitement de signal 23 une réplique de référence du signal émis mémorisée par le dispositif émetteur.

Enfin, le dispositif récepteur 20 comporte une unité de détection et de localisation 25. La localisation repose sur une mesure du temps de propagation du signal entre le dispositif émetteur et le dispositif récepteur, ou sur une mesure de différence de temps d'arrivée du signal au niveau de plusieurs récepteurs (méthode dite TDOA pour « Time Différence Of Arrival »).

Le dispositif récepteur 20 peut également comporter un module de communication (non représenté sur les figures) pour échanger des informations avec une station de contrôle au sol, avec un dispositif émetteur 10 et/ou avec un autre dispositif récepteur 20.

Il convient de noter que la détection et/ou la localisation peut également être mise en oeuvre dans une entité distincte d'un dispositif récepteur 20, par exemple par une station de contrôle au sol, à partir de mesures effectuées par un ou plusieurs dispositifs récepteurs 20.

D) Principe de la détection

Le principe de la détection est celui de la détection par un radar bi-statique à savoir une détection de maxima locaux causés par une cible d'intérêt sur une estimation de la fonction d'ambiguïté, ou une approximation de cette dernière, ce qui recouvre le cas notamment du traitement pulse-Doppler.

La principale difficulté du traitement dans le cas d'un radar bi-statique aéroporté tient en la limitation de l'impact du retour du fouillis de sol (échos parasites reçus par un dispositif récepteur après réflexion sur le sol) et du signal direct (signal émis par le dispositif émetteur reçu directement par le dispositif récepteur sans réflexion sur la cible). En effet le signal réfléchi par le sol et le signal reçu en ligne direct du satellite émetteur peuvent être reçus avec un niveau de puissance bien supérieur au signal reçu en provenance de la cible (signal d'intérêt), et ils peuvent par conséquent masquer le signal d'intérêt.

Différentes méthodes sont envisageables pour limiter ces effets de masquage du signal d'intérêt.

Il est notamment possible de mettre en oeuvre une annulation dans le domaine analogique, en amont de la numérisation, de la composante due au signal direct dans le signal reçu, par soustraction du signal de référence (signal mémorisé ou signal reçu sur une voie de référence) avec un gain et une phase appropriée.

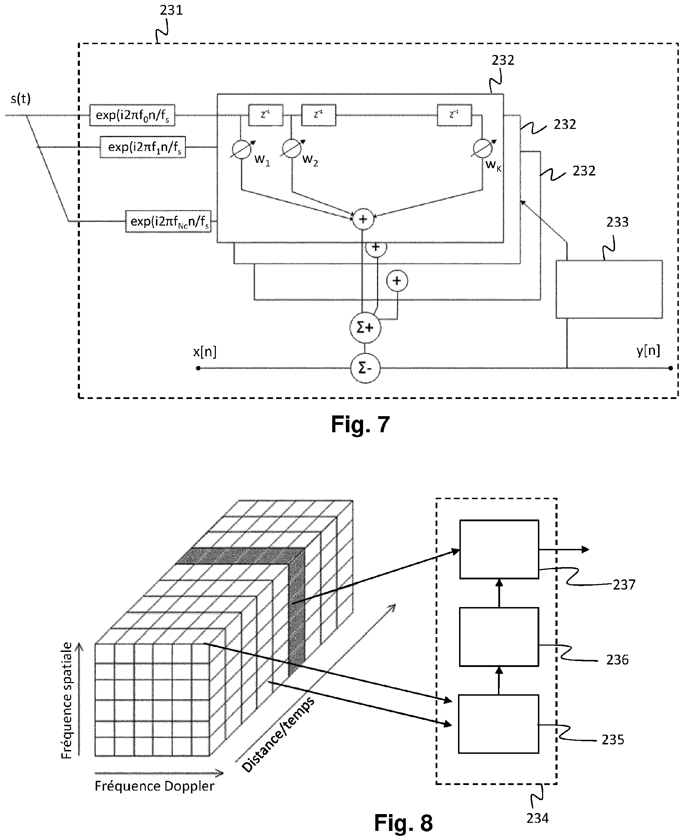

Il est d'autre part possible de mettre en oeuvre une annulation dans le domaine numérique, après la numérisation, pour diminuer la contribution de certaines interférence particulièrement puissantes (fouillis de sol) en cascadant plusieurs filtres et en y incluant des répliques translatées en fréquence du signal de référence. La figure 7 illustre schématiquement un exemple de module 231 de filtrage adaptatif compris dans l'unité de traitement de signal 23 d'un dispositif récepteur 20 pour mettre en oeuvre une telle annulation numérique. La contribution du signal direct et des échos forts de fouillis est limitée par soustraction dans le signal reçu numérisé x[n]. Plusieurs filtres adaptatifs 232 prennent en entrée une version décalée en Doppler du signal de référence s(t). Dans chaque filtre adaptatif 232, les poids $w_i$ des filtres associés respectivement aux différents éléments antennaires de l'antenne de réception du dispositif récepteur 20 sont calculés par un processeur 233, avec une fréquence de rafraichissement rapide, pour minimiser la puissance du signal y[n] obtenu en sortie.

Ces deux types d'annulation (analogique et numérique) peuvent être combinés dans certains cas. L'annulation analogique permet de réduire la dynamique de numérisation et ainsi d'éviter l'introduction de bruit de quantification dans le traitement. L'annulation numérique permet de supprimer une partie des retours du fouillis et du résidu du signal direct. Qu'elle soit dans le domaine numérique ou dans le domaine analogique, la boucle d'annulation du signal vise à minimiser la puissance du signal y[n] en sortie pour limiter les effets de masquage d'un signal fort sur un signal faible.

Alternativement ou en complément, et tel qu'illustré sur la figure 8, l'unité de traitement de signal 23 peut comporter un module 234 de traitement spatio-temporel pour mettre en oeuvre un filtrage adaptatif dans le domaine fréquence Doppler / fréquence spatiale (également appelée fréquence angulaire). Ce filtrage adaptatif repose sur une estimation de la matrice de covariance dans le domaine fréquence Doppler / fréquence spatiale des retours du fouillis de sol. Cette matrice de covariance est ensuite utilisée pour maximiser le rapport signal à bruit plus interférences de la détection sur tout le cube de détection selon les trois dimensions fréquence Doppler, fréquence spatiale, et temps/distance. L'objectif de ce filtrage est de supprimer les retours en provenance du sol en fonction des propriétés statistiques de la mesure qui en est faite dans le domaine Doppler / fréquence spatiale. L'efficacité de ce filtrage tient en la restriction sur un arc étroit (« clutter ridge » en anglais) de la contribution du fouillis dans le domaine Doppler / fréquence spatiale.

Sur la figure 8, chaque cube correspond à un temps d'intégration cohérent pour un élément antennaire de l'antenne de réception du dispositif récepteur 20 pour une fréquence Doppler particulière (il convient de noter que, par abus de langage, le terme « fréquence Doppler » correspond à un « décalage fréquentiel du signal dû à l'effet Doppler »). Le but est d'effectuer un filtrage adapté bidimensionnel permettant de rejeter le fouillis de sol et les résidus du signal direct. Ces techniques sont connues sous le nom de traitement STAP (acronyme anglais pour « Space Time Array Processing »). Le module 234 de traitement spatio-temporel comporte par exemple un module 235 d'estimation de la corrélation des interférences, un module 236 de calcul des poids de filtrage et un module 237 d'application desdits poids de filtrage.

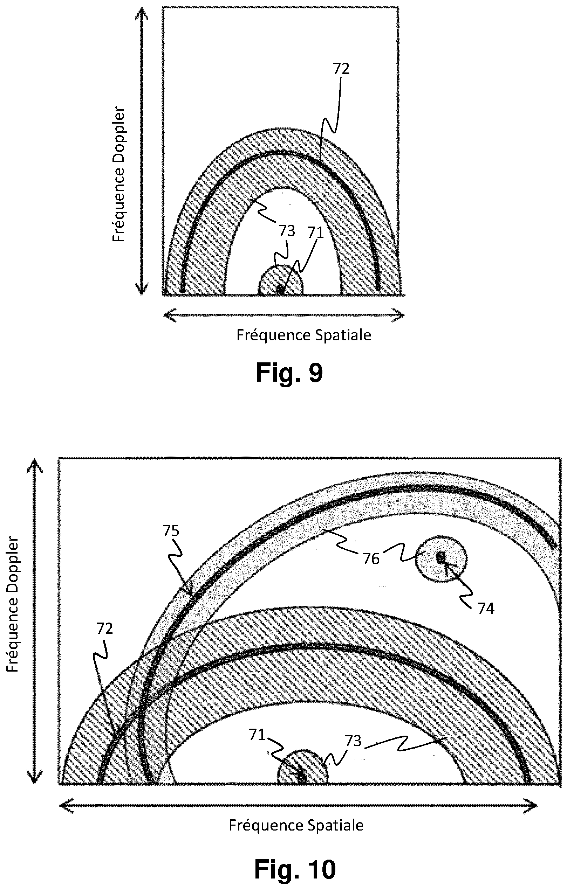

Tel qu'illustré sur la figure 9, la suppression du fouillis par des méthodes de traitement spatio-temporel peut détériorer la capacité de détection pour des cibles proches du fouillis dans le plan fréquence Doppler / fréquence spatiale du fait de l'implémentation imparfaite du filtrage (ceci est principalement dû à la difficulté de disposer d'une estimation fiable de la matrice de covariance du fouillis). La figure 9 représente, dans le plan fréquence spatiale / fréquence Doppler, pour un satellite engendrant un Doppler nul (vitesse relative nulle par rapport à la Terre ou orthogonale à la ligne de visée entre la cible et le satellite), la localisation 71 du signal direct, la localisation 72 du fouillis, et une zone 73 (en hachurée) de moindre détectabilité des cibles. Cette zone 73 de moindre détectabilité est due aux imperfections du filtrage spatio-temporel. Il s'agit d'une zone pour laquelle les pertes de rapport signal à bruit par rapport au signal à bruit optimum en l'absence de fouillis et de filtrage dépasse un certain seuil.

La détection se fait en comparant la puissance estimée dans chaque case fréquence spatiale / fréquence Doppler / distance après focalisation par le traitement spatio-temporel. Le seuil de détection est usuellement établi pour correspondre à une probabilité de fausse alarme donnée en utilisant une statistique à priori du bruit de détection. Dans le cadre de traitement spatio-temporel de type STAP, le rapport signal à bruit plus interférence s'exprime en fonction de la matrice de corrélation du signal. Le bruit de fond de détection peut être estimé en connaissant la matrice de corrélation pour chaque case distance du bruit thermique et des signaux interférents. Le filtrage adapté créé des zones dans le domaine fréquence spatiale / fréquence Doppler dans lesquels le retour des signaux sera fortement atténué. Par conséquent le retour d'une cible située dans ces zones sera très atténué et la cible ne pourra vraisemblablement pas être détectée. Ces zones de moindre détectabilité dépendent de la profondeur de réjection souhaitée, de la qualité de l'estimation de la matrice de corrélation du fouillis et de la largeur spectrale du fouillis dans une case distance / fréquence spatiale.

Dans le système radar selon l'invention, la possibilité de disposer de différentes configurations géométriques de mesure (diversité engendrée par les différentes configurations bi-statiques disponibles fournis par plusieurs dispositifs émetteurs et/ou plusieurs dispositifs récepteurs) permet de maximiser la probabilité qu'une cible ne soit pas dans le même domaine fréquence spatiale / fréquence Doppler que le fouillis en retour du sol. Une illustration de cet effet est proposée par la figure 10 qui représente dans le plan fréquence spatiale / fréquence Doppler la localisation 71 du signal direct, la localisation 72 du fouillis, et la zone 73 de moindre détectabilité pour un premier dispositif émetteur, ainsi que la localisation 74 du signal direct, la localisation 75 du fouillis, et la zone 76 de moindre détectabilité pour un deuxième dispositif émetteur. La zone de moindre détectabilité résultant du cumulant des mesures issues de plusieurs dispositifs émetteurs est l'intersection des zones de moindre détectabilité sur les différentes configurations de mesures (intersection des zones hachurée). La zone de moindre détectabilité résultant est donc nettement plus petite que la zone de moindre détectabilité dans le cas où un seul dispositif émetteur est utilisé.

E) Principe de la localisation

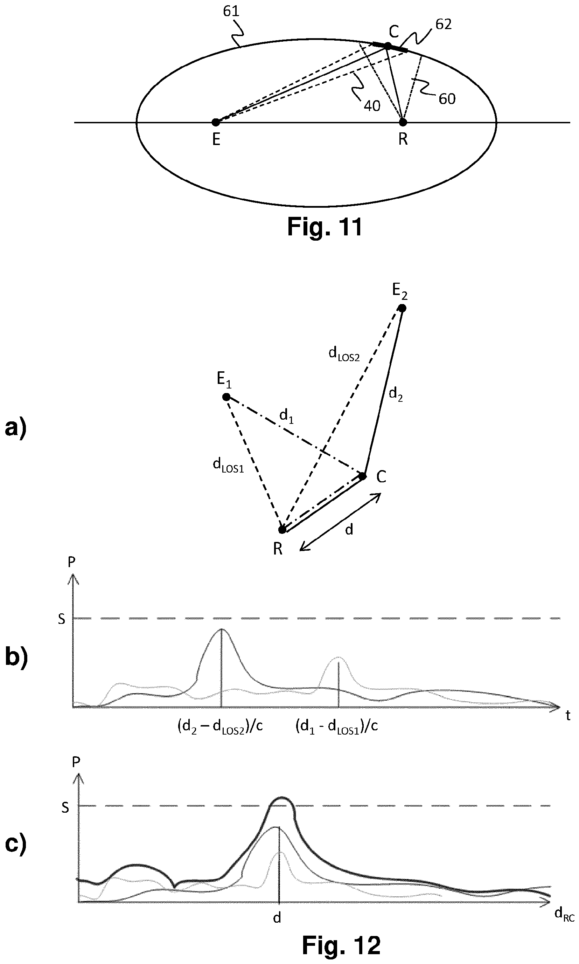

L'unité de détection et de localisation 25 est configurée pour estimer la position d'une cible 30 à partir d'une information représentative de la distance entre la cible 30 et le dispositif récepteur 20. La figure 11 illustre schématiquement un exemple de mise en oeuvre de cette estimation de la position de la cible 30 par l'unité de détection et de localisation 25. Le point E correspond à la position d'un dispositif émetteur 10, le point R correspond à la position d'un dispositif récepteur 20, le point C correspond à la position de la cible 30 à détecter. La détermination par l'unité de détection et de localisation 25 d'un décalage temporel entre le signal reçu par le dispositif récepteur 20 et la réplique de référence permet d'accéder à la différence entre d'une part la somme (EC + RC) de la distance entre E et C et la distance entre R et C, et d'autre part la distance entre E et R. Connaissant la distance entre E et R, il est possible de localiser C sur l'ellipsoïde 61 dont les foyers sont E et R. Si disponible, et tel qu'illustré sur la figure 11, la connaissance de la position du cône d'illumination du faisceau radio 40 par le dispositif émetteur 10 et/ou du cône de visibilité 60 du dispositif récepteur 20 peut être exploitée pour limiter l'estimation de la position de la cible 30 à un secteur angulaire 62 restreint de l'ellipsoïde 61 (dans l'exemple illustré à la figure 11 ce secteur angulaire 62 correspond à l'intersection entre le cône d'illumination du faisceau radio 40, le cône de visibilité 60 et l'ellipsoïde 61).

Ces informations sont suffisantes pour remonter à une localisation de la cible ayant provoqué l'écho. Une mesure Doppler permet d'accéder à la vitesse d'évolution de la distance représentative de la géométrie de la mesure et de la vitesse de la cible. Il est à noter que les méthodes dites de super résolution (MUSIC par exemple) peuvent être utilisées pour affiner la localisation angulaire des cibles à des résolutions bien inférieures à l'angle d'ouverture à -3 dB de l'antenne utilisée par le récepteur.

Avantageusement, un système radar 90 selon l'invention est un système radar multi-statique comportant plusieurs dispositifs émetteurs 10 et/ou plusieurs dispositifs récepteurs 20 pour générer de la diversité d'émission et/ou de la diversité de réception. En effet, si l'on note $N_E$ le nombre de dispositifs émetteurs 10 et $N_R$ le nombre de dispositifs récepteurs 20, où $N_E$ et $N_R$ sont des entiers naturels positifs, on dispose d'un nombre $N_E.N_R$ ($N_E$ multiplié par $N_R$) de configurations bi-statiques. Cela permet de multiplier les mesures de distances et les mesures angulaires lorsque $N_E.N_R$ est supérieur ou égal à deux ($N_E.N_R \geq 2$). Ces mesures sont caractérisées par une covariance d'erreur dépendant de la configuration de mesure (géométrie, rapport signal à bruit, orientation relative entre dispositif émetteur, dispositif récepteur et cible, etc.). La connaissance de la corrélation de l'erreur permet de pondérer de manière optimale (au sens des moindres carrés par exemple) la prise en compte des différentes mesures dans le problème du positionnement de la cible. Ce problème de positionnement peut s'exprimer comme la détermination de la position minimisant l'erreur quadratique entre les observables mesurées (distance, position angulaire) et ces mêmes observables correspondant à une position donnée définie à partir des caractéristiques de mesure.

Lorsque le nombre $N_R$ de dispositifs récepteurs 20 est supérieur ou égal à deux ($N_R \geq 2$), l'observable produit peut être exprimé sous la forme d'une différence de temps d'arrivée, au niveau des différents dispositifs récepteurs 20, du signal émis par un dispositif émetteur 10 et réfléchi par une cible 30. Cette mesure de la différence de temps d'arrivée peut être complémentée par une information angulaire issue de l'état du système antennaire ou d'un traitement spatio-temporel. La localisation peut alors être réalisée en utilisant des différences de temps d'arrivées suivant des méthodes TDOA conventionnelles de localisation d'une source radiofréquence (la source radiofréquence dans le cas présent étant la cible réfléchissant le signal émis). L'information apportée par une différence de temps d'arrivée dans le cas du radar multi-statique sera la localisation sur un hyperboloïde plutôt que sur un ellipsoïde comme dans le cas du radar bi-statique. Un des avantages de l'utilisation d'une mesure de temps de propagation différentiel entre deux dispositifs récepteurs repose sur le fait qu'il n'est pas nécessaire de connaître la position du dispositif émetteur, dans la mesure ou la distance entre le dispositif émetteur et la cible est annulée par différence. Aussi, il n'est pas nécessaire de maintenir une synchronisation en temps et en fréquence entre un dispositif émetteur et un dispositif récepteur. Seule une synchronisation en temps et en fréquence entre les différents dispositifs récepteurs est requise.

Lorsque le nombre $N_E$ de dispositifs récepteurs 20 est supérieur ou égal à deux ($N_E \geq 2$), il est possible de coupler des scores de détection associés respectivement aux différents dispositifs émetteurs en les projetant dans une géométrie commune pour améliorer les capacités de détection du système.

La figure 12 illustre ce principe avec un exemple dans lequel deux scores de détection associés respectivement à des émissions en provenance de deux dispositifs émetteurs 10 dans une direction donnée. Les positions respectives $E_1$ et $E_2$ des deux dispositifs émetteurs 10, la position C de la cible 30 et la position R d'un dispositif récepteur 20 sont représentées sur la partie a) de la figure 12. On note $d_1$ la somme ($E_1C + CR$) de la distance entre $E_1$ et C et de la distance entre C et R. On note $d_2$ la somme ($E_2C + CR$) de la distance entre $E_2$ et C et de la distance entre C et R. On note d la distance entre C et R. On note $d_{LOS1}$ la distance en ligne de visée directe entre $E_1$ et R. On note $d_{LOS2}$ la distance en ligne de visée directe entre $E_2$ et R.

Tel qu'illustré sur la partie b) de la figure 12, les signaux réfléchis vers le dispositif récepteur (positionné en R) par la cible (positionnée en C) en provenance respectivement du premier dispositif émetteur (positionné en $E_1$) et du deuxième dispositif émetteur (positionné en $E_2$) présentent un décalage temporel différent du fait de la géométrie différente entre d'une part l'ellipsoïde ayant pour foyers R et $E_1$ et d'autre part l'ellipsoïde ayant pour foyers R et $E_2$. Si on note c la vitesse de la lumière (qui correspond aussi à la vitesse de propagation d'un signal radio), le décalage temporel observé au niveau du premier dispositif émetteur entre le signal reçu après réflexion et le signal de référence (qui serait émis directement par le dispositif émetteur) vaut $(d_1 - d_{LOS1})/c$. Le décalage temporel observé au niveau du deuxième dispositif émetteur entre le signal reçu après réflexion et le signal de référence vaut $(d_2 - d_{LOS2})/c$. Les deux courbes représentées sur la parte b) de la figure 12 représentent l'évolution de la puissance P reçue par un dispositif récepteur en fonction du temps t respectivement pour le premier dispositif émetteur et le deuxième dispositif émetteur. Un pic de puissance reçue est observé pour une valeur de décalage temporel $(d_1 - d_{LOS1})/c$ pour le premier dispositif émetteur. Un pic de puissance reçue est observé pour une valeur de décalage temporel $(d_2 - d_{LOS2})/c$ pour le deuxième dispositif émetteur. Eventuellement, et tel qu'illustré sur la partie b) de la figure 12, l'amplitude de ces pics de puissance reçue n'est pas suffisante pour dépasser un seuil S de détection. L'amplitude d'un pic de puissance correspond à un score de détection attribuée à un dispositif émetteur.

Connaissant la géométrie de la mesure (c'est-à-dire connaissant les positions $E_1$ et $E_2$ des dispositifs émetteurs, la position R du dispositif récepteur, et la direction dans laquelle est reçue par le dispositif récepteur un signal réfléchi par la cible), il est possible de ré-échantillonner les signaux selon une géométrie commune, à savoir la direction de visée dans laquelle sont reçus les signaux par le dispositif récepteur, en fonction de la distance $d_{RC}$ séparant le dispositif émetteur et la cible. Tel qu'illustré sur la partie c) de la figure 12, les signaux issus respectivement du premier dispositif émetteur et du deuxième dispositif émetteur seront alors coïncidents, permettant une augmentation de la puissance utile alors que le bruit de mesure reste décorrélé. Cela permet ainsi de cumuler les scores de détection associés respectivement aux deux dispositifs émetteurs. Ce cumul d'indicateurs statistiques permet d'améliorer la sensibilité de détection par accumulation non cohérente des puissances mesurées sur les différents groupes d'observation. Cette accumulation non-cohérente permet généralement d'augmenter le rapport signal à bruit de l'interférence d'un facteur proportionnel à la racine du nombre de mesures cumulées.

Une autre solution pour tirer parti de la configuration multi-statique pour augmenter la sensibilité de détection consiste à prendre une décision sur l'estimation de la position de la cible à partir d'une combinaison de décisions élémentaires correspondant respectivement à différentes configurations bi-statiques parmi les $N_E.N_R$ configurations bi-statiques disponibles. La combinatoire sous-jacente permet de réduire le rapport signal à bruit de détection unitaire tout en gardant une probabilité de fausse détection acceptable.

### F) Protection de la forme d'onde du signal utile

Dans la solution proposée, les dispositifs émetteurs 10 peuvent être écoutés et localisés par un système concurrent. En effet, les trajectoires des satellites 11 embarquant lesdits dispositifs émetteurs 10 sont prédictibles par les lois de la mécanique spatiale. De plus, la puissance des signaux émis par les dispositifs émetteurs les rend par exemple facilement localisables par des systèmes de goniométrie interférométriques situés au sol ou embarqués dans des plateformes aériennes ou spatiales. De ce fait, en l'absence de contremesure, les dispositifs émetteurs 10 d'un système radar 90 selon l'invention peuvent être utilisés par d'éventuels concurrents comme des émetteurs d'opportunités pour un radar passif.

Il est possible d'inclure au système radar 90 selon l'invention une fonctionnalité permettant de limiter très fortement l'usage par un tiers du signal émis par un dispositif émetteur 10. Dans ce but, le signal émis par un dispositif émetteur 10 est une combinaison (par exemple une addition) d'un signal utile avec un signal parasite, ledit signal parasite étant décorrélé du signal utile et présentant une fonction d'ambiguïté avec un lobe principal d'une largeur dans le domaine fréquentiel supérieure à deux fois le décalage fréquentiel Doppler maximal susceptible d'être observé pour une cible visée par le système radar.

Un dispositif récepteur 20 du système radar 90 connait la forme d'onde du signal émis et/ou la forme d'onde du signal parasite. Le dispositif récepteur 20 peut alors calculer une fonction d'ambiguïté entre le signal reçu et le signal émis. Le signal émis correspond par exemple à un signal de référence mémorisé par le dispositif récepteur 20, ou bien à un signal de référence reçu directement du dispositif émetteur 10 (sans réflexion) duquel le signal parasite est soustrait.

Un récepteur non autorisé voulant faire une utilisation opportuniste du signal émis devra réaliser le calcul d'une fonction d'ambiguïté entre le signal reçu par une voie de recherche après réflexion sur la cible et le signal reçu par une voie de référence directement en provenance du dispositif émetteur (sans réflexion). Le signal reçu par la voie de référence contient à la fois la forme d'onde du signal utile et la forme d'onde du signal parasite. Toutefois, ce récepteur ne peut pas séparer à son bord le signal utile du signal parasite. En effet, la forme d'onde du signal utile est protégée par exemple par un mécanisme cryptographique incluant un état secret d'initialisation (comme un registre à décalage à rétroaction linéaire, ou LFSR pour « Linear Feedback Shift Register » dans la littérature anglo-saxonne), et le signal parasite présente également un caractère pseudo aléatoire. Les lobes secondaires de la fonction d'ambiguïté (« Cross Ambiguity Function » ou CAF dans la littérature anglo-saxonne) dans le domaine fréquentiel du signal parasite vont dès lors rehausser la contamination du signal réfléchi par les interférences et baisser la sensibilité de détection par rapport à celle obtenue à partir d'un dispositif récepteur 20 du système radar 90.

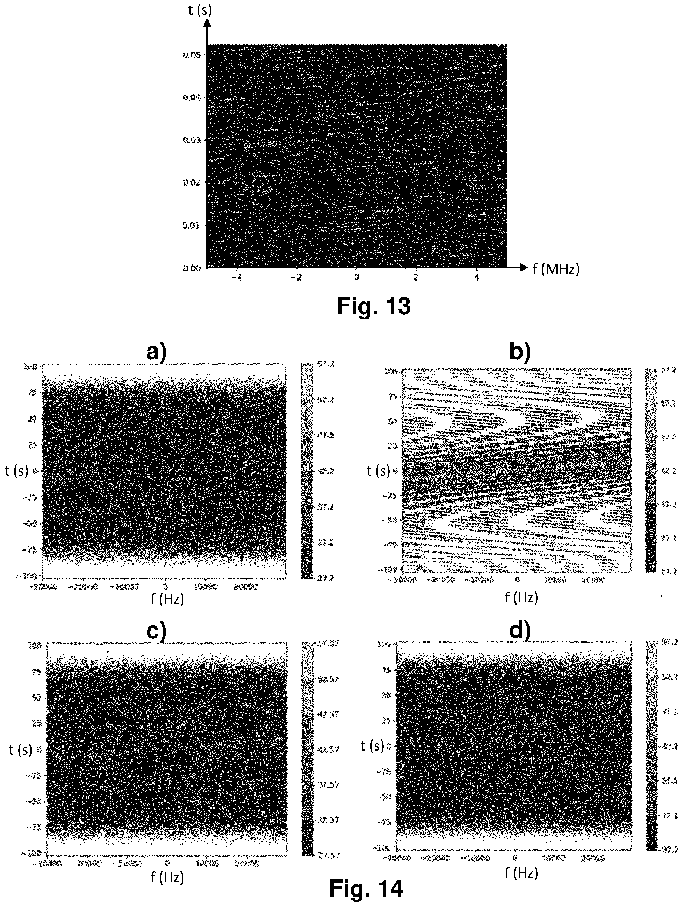

Avantageusement, le signal parasite est un signal « chirp » présentant une fréquence variant linéairement autour d'une fréquence centrale pendant une certaine période de temps, avec un changement aléatoire de la fréquence centrale d'une période à l'autre. Un exemple de spectrogramme d'un tel signal est illustré à la figure 13. La valeur de la fréquence centrale $f_0$ change par exemple avec une période de durée T. Sur une période T, le signal « chirp » c(t) prend par exemple la forme suivante :

[Math. 2]

$$c(t) = A e^{i2\pi\left(f_0 + \frac{\Delta f}{T}t - \frac{\Delta f}{2}\right)t}$$

où A est une valeur constante (amplitude de l'enveloppe) et Δf est la bande de fréquence centrée sur la fréquence centrale $f_0$ balayée pendant une période T.

Il convient toutefois de noter que, dans des variantes, la durée de la période pendant laquelle la fréquence du signal varie linéairement autour de la fréquence centrale peut changer d'une période à l'autre. Aussi, l'amplitude de l'enveloppe peut varier au cours du temps.

De préférence, la largeur de modulation des chirps (c'est-à-dire la largeur Δf de la bande de fréquence balayée pendant une période T) peut être choisie pour être supérieure à la fréquence Doppler maximale susceptible d'être observée pour une cible 30 visée par le système radar 90 afin de s'assurer que des échos parasites en retour du sol viendront nécessairement contaminer significativement le signal reçu par un récepteur non autorisé n'appartenant pas au système radar 90.

La partie a) de la figure 14 représente un exemple de fonction d'auto-ambiguïté d'un signal utile émis par un dispositif émetteur 10 du système radar 90 selon l'invention. La partie b) de la figure 14 représente la fonction d'auto-ambiguïté du signal parasite de type « chirp ». La partie c) de la figure 14 représente la fonction d'ambiguïté calculée par un récepteur non autorisé n'appartenant pas au système radar 90 à partir d'un signal reçu après réflexion par une cible et d'un signal de référence reçu directement d'un dispositif émetteur 10. Enfin, la partie d) de la figure 14 représente la fonction d'ambiguïté calculée par un dispositif récepteur 20 appartenant au système radar 90 à partir d'un signal reçu après réflexion par une cible et d'un signal de référence mémorisé (pour rappel, le dispositif récepteur 20 a connaissance de la forme d'onde du signal utile et/ou du signal parasite). Dans l'exemple illustré à la figure 14, le signal parasite a une puissance dix fois moindre que le signal utile.

Dans un environnement comportant des interférences (fouillis de sol, signal direct parasite, brouillage, etc.), la puissance ramenée par lobe secondaire de la fonction d'ambiguïté va détériorer sensiblement la sensibilité de détection d'un système concurrent. En effet, l'occupation dans le plan fréquentiel des lobes secondaires de la fonction d'ambiguïté engendrés par le signal parasite va masquer les échos utiles dans une partie significative du plan fréquence spatiale / fréquence Doppler.

Il convient de noter que les éléments décrits ci-avant pour protéger la forme d'onde d'un signal utile émis par un dispositif émetteur 10 du système radar 90 selon l'invention pourrait s'appliquer plus largement pour d'autres systèmes radars, et notamment pour des systèmes radars dont les dispositifs émetteurs ne sont pas nécessairement embarqués dans des satellites.

G) Contrôle du système radar

Pour être opéré de façon efficace, le système radar 90 selon l'invention peut nécessiter de disposer de différents canaux de communications (de préférence sécurisés).

Un canal de communication entre un dispositif émetteur 10 et un dispositif récepteur 20 peut notamment être nécessaire pour échanger des informations sur la synchronisation, les motifs d'illumination, les éphémérides des satellites transportant les dispositifs émetteurs, etc. Ce canal de communication peut par exemple être réalisé via une modulation secondaire dans le signal émis par le dispositif émetteur 10 à destination du dispositif récepteur 20. Selon un autre exemple, ce canal de communication peut être réalisé par un réseau de télécommunication par satellite annexe.

Un canal de communication entre différents dispositifs récepteurs 20 peut également être nécessaire pour permettre la construction d'une métrique de détection basée sur des mesures effectuées par plusieurs dispositifs récepteur. Ce canal de communication peut également permettre de partager la vue de la situation aérienne spécifique à chaque récepteur pour couvrir de façon optimisée la région d'intérêt.

Un canal de communication entre une station de contrôle au sol et les dispositifs émetteurs 10 et/ou les dispositifs récepteurs 20 peut également être nécessaire pour transmettre toute information pertinente à l'opération du système (position des dispositifs émetteurs, séquence d'illumination, synchronisation, résultats des mesures effectuées par les dispositifs récepteurs, etc.).

Il convient de noter que ces canaux de communication ne sont cependant pas toujours indispensables au fonctionnement du système radar 90 selon l'invention dans la mesure où certaines informations peuvent être mémorisées a priori par un dispositif émetteur 10 et/ou par un dispositif récepteur 20.

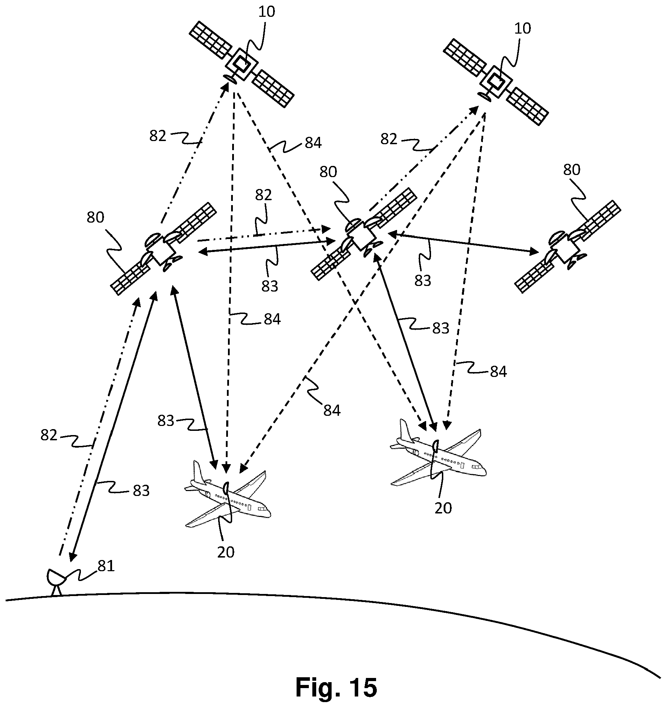

Dans un mode particulier de réalisation, tel qu'illustré sur la figure 15, les dispositifs émetteurs 10 et/ou les dispositifs récepteurs 20 sont configurés pour communiquer via un réseau de télécommunications par satellite pour échanger des données entre deux dispositifs émetteurs 10, entre deux dispositifs récepteurs 20, entre un dispositif émetteur 10 et un dispositif récepteur 20, entre une station de contrôle 81 au sol et un dispositif émetteur 10, ou entre une station de contrôle 81 au sol et un dispositif récepteur 20. Le réseau de télécommunications par satellite comporte notamment les satellites de télécommunications 80 et la station de contrôle 81 au sol.

Tel qu'illustré sur la figure 15, le réseau de télécommunications par satellite permet par exemple d'établir des liens 82 de communication pour envoyer des informations depuis la station de contrôle 81 au sol vers les dispositifs émetteurs 10 (par exemple une information relative à la région d'intérêt à surveiller, une commande relative la forme d'onde à générer, une séquence d'illumination à effectuer, des informations de synchronisation, etc.), des liens 83 de communication pour échanger des informations entre la station de contrôle 81 au sol et les dispositifs récepteurs 20 (par exemple pour le partage de fonction de détection, d'observables mesurés, de cibles localisées, etc.) et des liens 84 de communication pour envoyer des informations depuis les dispositifs émetteurs 10 vers les dispositifs récepteur 20 (éphémérides, synchronisation, séquence d'illumination, etc.).

L'architecture du réseau de télécommunications par satellite peut avoir différentes formes et différents niveaux de centralisation (d'une architecture entièrement maillée à une architecture entièrement centralisée). Un réseau de télécommunication par satellitaire est particulièrement bien adapté car il permet une couverture mondiale. Les liens établis entre les satellites de télécommunications 80 (ISL pour « Inter-Satellite Link ») permettent en effet d'établir un échange de données entre deux entités très éloignées l'une de l'autre.

Il convient de noter que certaines fonctions décrites ci-avant en référence à la figure 15 peuvent être colocalisées. Par exemple, un satellite 11 transportant un dispositif émetteur 10 peut également jouer le rôle d'un satellite 80 du réseau de télécommunications. Aussi, plusieurs stations de contrôle 81 au sol peuvent être impliquées pour augmenter la résilience globale du système. Un centre de commande peut collecter des informations provenant des différents dispositifs récepteurs 20 et réaliser les traitements à partir des informations collectées. Cette fonction pourrait également être réalisée par l'un des dispositifs récepteurs 20 ou par un satellite 80 du réseau de télécommunications.

## H) Premier exemple avec des dispositifs émetteurs en constellation MEO et des dispositifs récepteurs aéroportés

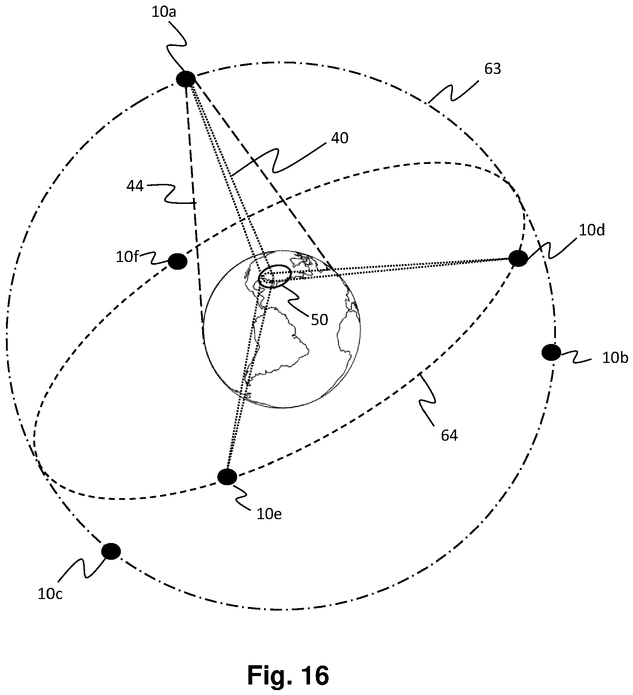

Un premier exemple de mise en oeuvre d'un système radar 90 selon l'invention est illustré sur la figure 16. Ce premier exemple concerne un système radar 90 multi-statique comportant six dispositifs émetteurs 10a à 10f embarqués dans des satellites en orbite moyenne (ou MEO pour « Medium Earth Orbit ») à une altitude de 22000 km et répartis sur deux plans orbitaux 63, 64 orthogonaux. Sur chaque plan orbital, les satellites sont espacés les uns des autres par un angle de 120° afin de permettre une illumination continue de n'importe quel point à la surface de la Terre. Trois satellites embarquant respectivement les dispositifs émetteurs 10a, 10b et 10c sont situés dans un premier plan orbital 63. Trois satellites embarquant respectivement les dispositifs émetteurs 10d, 10e et 10f sont situés dans un deuxième plan orbital 64. Sur la figure 16, le cône 44 représente la zone pouvant être illuminée sur Terre par le satellite embarquant le dispositif 10a. Dans l'exemple illustré sur la figure 16, les dispositifs émetteurs 10a, 10d et 10e génèrent chacun un faisceau radio 40 pour illuminer une partie d'une région d'intérêt 50 à la surface de la Terre. Différents faisceaux peuvent être générés successivement pour balayer l'intégralité de la région d'intérêt 50.

Il est bien entendu envisageable de considérer une constellation comportant un plus grand nombre de satellites pour augmenter le nombre de dispositifs émetteurs 10 et ainsi permettre une illumination plus fréquente d'une sous-région de la région d'intérêt 50, un temps d'intégration plus long et/ou une meilleure sensibilité de détection.

Dans ce premier exemple, les dispositifs récepteurs 20 sont embarqués dans des avions (récepteurs aéroportés). La bande de fréquences utilisée par le système radar 90 est la bande X (plage de fréquences d'onde radio dite supra-haute fréquence, ou SHF, située aux alentours de 10 GHz) pour permettre une compatibilité avec les radars aéroportés opérant conventionnellement dans cette bande de fréquence (pour des compromis entre la taille de l'antenne, la capacité de l'électronique et les atténuations de signal lors de la propagation dans l'atmosphère).

Dans l'exemple considéré, un dispositif émetteur 10 émet un signal en bande X avec une puissance radio de l'ordre de 10 kW avec une antenne de douze mètres de diamètre dont le réflecteur est capable de former un faisceau radio en tout point de la Terre. Ce type de repointage d'antenne est compatible avec l'utilisation d'un réseau phasé dans le plan focal du réflecteur. Il est à noter qu'en termes de puissance et de dimension d'antenne, les caractéristiques de cette antenne sont très proches de celles de certains satellites de télécommunications. Un dispositif émetteur 10 forme un unique faisceau radio de puissance rayonnée isotrope équivalente maximale (EIRP pour « Effective Isotropic Radiated Power ») proche de 100 dBW. L'efficacité de l'antenne d'émission est d'environ 65%. L'ouverture à -3 dB d'une telle antenne est de 0,18°. L'empreinte au sol d'un faisceau radio formée par l'antenne présente alors un diamètre de l'ordre de 58 km. Par conséquent une région d'intérêt de 400 km de diamètre peut être illuminée en constituant une cinquantaine de faisceaux illuminés successivement suivant par exemple le schéma d'éclairement illustré à la figure 3.

Dans l'exemple considéré, un dispositif récepteur 20 comporte un système antennaire avec une ouverture de 0,8 m$^2$ et une température de bruit du système de 220 K.

Le tableau ci-dessous récapitule les paramètres associés au premier exemple :

[Table 1]

| | |
|---|---|
| Fréquence | 9,5 GHz |
| Altitude du satellite embarquant le dispositif émetteur | 22000 km |
| Diamètre d'antenne du dispositif émetteur | 12 m |
| Gain d'antenne à l'émission | 59,7 dBi |
| Efficacité d'antenne | 0,65 |
| Diamètre de l'empreinte au sol d'un faisceau radio | 57,9 km |
| Puissance d'émission | 10 kW |
| Surface de l'antenne du dispositif récepteur | 0,8 m$^2$ |
| Gain d'antenne à la réception | 38,2 dBi |
| SER (Surface Equivalente Radar) de la cible | 1 m$^2$ |
| Température de bruit du dispositif récepteur | 220 K |
| Temps d'intégration | 0,2 s |
| Pertes totales (atténuations atmosphériques, RF, traitement du signal, etc.) | 10 dB |
| Rapport signal à bruit $SNR_R$ de détection | 10 dB |
| Nombre de faisceaux pour illuminer une région d'intérêt de 400 km de diamètre | 50 |
| Temps de revisite | 10 s |
| Portée de détection maximale | 204 km |

Il apparaît ainsi qu'il est possible d'obtenir une portée de détection de plus de 200 km pour des cibles de 0 dBm$^2$ de surface équivalente radar (SER). Ces sensibilités peuvent être améliorées en augmentant le nombre de couples formés par un l'association d'un dispositif émetteur avec un dispositif récepteur (c'est-à-dire en augmentant le nombre $N_E.N_R$ de configurations bi-statiques utilisées) dans le calcul de la fonction de détection.

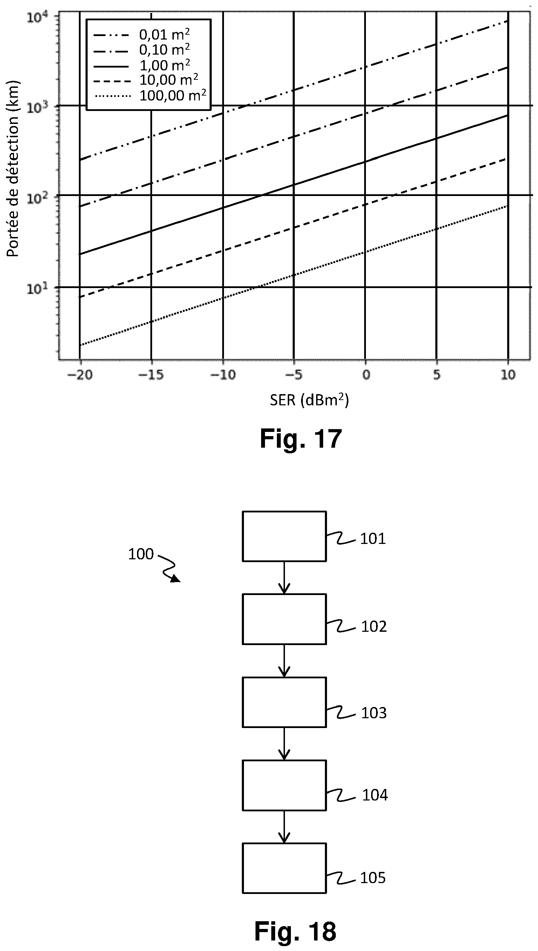

A partir de ces paramètres, il est possible de déterminer d'autres points de fonctionnement pour différentes caractéristiques de cibles (différentes valeurs de SER) et différentes tailles pour l'antenne d'un dispositif récepteur. Une illustration de différents points de fonctionnement possible est présentée à la figure 17.

I) Deuxième exemple avec des dispositifs émetteurs en constellation MEO et des dispositifs récepteurs en constellation LEO

Dans un deuxième exemple, les dispositifs émetteurs 10 sont situés sur une constellation similaire à celle du premier exemple décrit en référence à la figure 16, mais les dispositifs émetteurs sont situés à une altitude légèrement plus basse et présente une puissance d'émission légèrement plus importante. Les récepteurs sont quant à eux situés sur une constellation de satellite en orbite basse à 700 km d'altitude (orbite LEO pour « Low Earth Orbit »).

Pour ce deuxième exemple, le système opère en bande L autour de 1.3 GHz. Dans ce cas, le faisceau radio produit par une ouverture à -3 dB d'une antenne d'un dispositif émetteur est suffisant pour illuminer entièrement une région d'intérêt de 400 km de diamètre. Cela permet d'éviter d'avoir recours à une séquence d'illumination et de pouvoir intégrer les retours sur des durées d'intégration plus importantes que dans l'exemple précédent.

Les dispositifs récepteurs 20 en orbite basse comporte une antenne de 32 m$^2$ de surface et un réseau de formation de faisceau numérique. On suppose que la SER des cibles d'intérêts sera plus élevée en bande L qu'en bande X. Le temps d'intégration pour réaliser le traitement est de 2.5 secondes.

Le tableau ci-dessous récapitule les paramètres associés à ce deuxième exemple :

[Table 2]

| | |
|---|---|
| Fréquence | 1,3 GHz |
| Altitude du satellite embarquant le dispositif émetteur | 20700 km |
| Diamètre d'antenne du dispositif émetteur | 12 m |

(suite)

| | |
|---|---|
| Gain d'antenne à l'émission | 42,4 dBi |
| Efficacité d'antenne | 0,65 |
| Diamètre de l'empreinte au sol d'un faisceau radio | 398,1 km |
| Puissance d'émission | 12 kW |
| Surface de l'antenne du dispositif récepteur | 32 m$^2$ |
| Gain d'antenne à la réception | 36,9 dBi |
| SER (Surface Equivalente Radar) de la cible | 3,2 m$^2$ (5 dBm$^2$) |
| Température de bruit du dispositif récepteur | 220 K |
| Temps d'intégration | 2,5 s |
| Pertes totales (atténuations atmosphériques, RF, traitement du signal, etc.) | 10 dB |
| Rapport signal à bruit SNR$_R$ de détection | 10 dB |
| Nombre de faisceaux pour illuminer une région d'intérêt de 400 km de diamètre | 1 |
| Temps de revisite | 2,5 s |
| Portée de détection maximale | 1240 km |
| Rayon de la zone de détection projetée au sol | 1025 km |
| Nombre de satellites LEO en réception pour assurer une couverture en tout point du globe (25% de recouvrement de fauchée en moyenne) | 200 |

Dans ces conditions, comme récapitulé dans le tableau ci-dessus, la portée de détection des satellites LEO est de plus de 1240 km, ce qui permet de couvrir une zone de détection de 1025 km de rayon autour du Nadir du satellite. En supposant une constellation optimisée pour fournir une couverture mondiale avec un taux de recouvrement de 25%, une constellation de 200 satellites pourrait fournir la partie réception du système.

La description ci-avant illustre clairement que, par ses différentes caractéristiques et leurs avantages, la présente invention atteint les objectifs fixés, à savoir proposer un système radar pour la surveillance aérienne permettant d'optimiser la couverture, la portée de détection ainsi que la possibilité d'empêcher un usage non autorisé du signal émis par un émetteur.

Il est à noter que les modes de mise en oeuvre et de réalisation considérés ci-dessus ont été décrits à titre d'exemples non limitatifs, et que d'autres variantes sont par conséquent envisageables.

Au-delà des exemples présentés, il existe pour la solution proposée de nombreux autres points de fonctionnement possibles en termes d'orbites des satellites d'émission et de type de plateforme de réception. Aussi, divers points de fonctionnement en termes de fréquence d'opération sont envisageables dans une plage de fréquences variant entre 0.1 et 100 GHZ avec des contraintes et des opportunités différentes sur les chaînes d'émission et de réception et sur les méthodes de traitement du signal.

Tel qu'illustré sur la figure 18, l'invention concerne également un procédé 100 pour la surveillance aérienne à l'aide d'un système radar 90 bi-statique ou multi-statique. Le système radar 90 comporte au moins un dispositif émetteur 10 embarqué dans un satellite 11 en orbite autour de la Terre et au moins un dispositif récepteur 20. Le procédé comporte notamment les étapes suivantes :

- une détermination 101 d'une région d'intérêt 50 dans laquelle on souhaite détecter et géolocaliser un aéronef 30,
- un positionnement 102 dudit dispositif récepteur 20 pour surveiller ladite région d'intérêt 50,
- une communication 103 au dispositif émetteur 10 d'une information relative à ladite région d'intérêt 50,
- une émission 104, par ledit dispositif émetteur 10, d'un signal dans un faisceau radio 40 illuminant au moins une partie de ladite région d'intérêt 50,
- une estimation 105 de la position de l'aéronef 30 dans la région d'intérêt à partir d'un signal 41 reçu par le dispositif récepteur 20 correspondant à la réflexion sur l'aéronef 30 du signal émis par le dispositif émetteur 10.

Les différents éléments décrits précédemment pour les dispositifs émetteurs 10 et/ou les dispositifs récepteurs 20 du système radar 90 selon l'invention s'appliquent bien entendu également au procédé 100 sous la forme d'étapes optionnelles supplémentaires (détermination d'une séquence d'illumination, combinaison d'un signal parasite au signal utile pour protéger un signal émis par un dispositif émetteur, utilisation de la diversité d'émission et/ou diversité de réception pour détecter et géolocaliser une cible, utilisation d'un réseau de télécommunications par satellite pour échanger des données entre deux dispositifs émetteurs, entre deux dispositifs récepteurs, entre un dispositif émetteur et un dispositif récepteur, entre une station de contrôle au sol et un dispositif émetteur, ou entre une station de contrôle au sol et un dispositif récepteur, etc.).

**Revendications**

1. Dispositif émetteur (10) d'un système radar (90) bi-statique ou multi-statique pour la surveillance aérienne, ledit dispositif émetteur (10) étant destiné à être embarqué dans un satellite (11) en orbite autour de la Terre, **caractérisé en ce que** le système radar (90) est un système actif, le dispositif émetteur (10) étant configuré pour coopérer avec au moins un dispositif récepteur (20), et lorsque le dispositif émetteur (10) est à bord du satellite (11) en orbite, le dispositif émetteur (10) est configuré pour obtenir une information relative à une région d'intérêt (50) destinée à être surveillée par ledit au moins un dispositif récepteur (20) du système radar (90) et pour émettre un signal dans un faisceau radio (40) illuminant au moins une partie de ladite région d'intérêt (50).

2. Dispositif émetteur (10) selon la revendication 1 dans lequel la forme d'onde du signal émis est générée directement à bord du satellite (11) de manière autonome.

3. Dispositif émetteur (10) selon l'une des revendications 1 à 2 pour lequel, lorsqu'un faisceau radio (40) émis par le dispositif émetteur (10) ne peut pas illuminer entièrement la région d'intérêt (50), le dispositif émetteur (10) est configuré pour illuminer successivement différentes sous-régions (43) de la région d'intérêt.

4. Dispositif émetteur (10) selon l'une des revendications 1 à 3 comportant une antenne (16) à réseau phasé et un réseau de formation de faisceau (13) configuré pour repointer un faisceau radio (40) émis par le dispositif émetteur (10) selon différentes directions.

5. Dispositif émetteur (10) selon l'une des revendications 1 à 4 dans lequel le signal émis est une combinaison d'un signal utile avec un signal parasite, ledit signal parasite étant décorrélé du signal utile et présentant une fonction d'ambiguïté avec un lobe principal d'une largeur dans le domaine fréquentiel supérieure à deux fois le décalage fréquentiel Doppler maximal susceptible d'être observé pour une cible (30) visée par le système radar (90).

6. Dispositif émetteur (10) selon la revendication 5 dans lequel le signal parasite est un signal « chirp » présentant une fréquence variant linéairement autour d'une fréquence centrale pendant une période prédéterminée avec un changement aléatoire de la fréquence centrale d'une période à l'autre.

7. Dispositif émetteur (10) selon la revendication 6 dans lequel la largeur de bande balayée par le signal « chirp » pendant ladite période prédéterminée est supérieure à deux fois le décalage fréquentiel Doppler maximal susceptible d'être observé pour une cible (30) visée par le système radar (90).

8. Système radar (90) bi-statique ou multi-statique actif pour la surveillance aérienne d'une région d'intérêt (50), ledit système radar (90) visant à géolocaliser un aéronef (30) dans ladite région d'intérêt (50), ledit système radar (90) comprenant :

   - au moins un dispositif émetteur (10) selon l'une des revendications 1 à 7, chaque dispositif émetteur (10) étant configuré pour émettre un signal dans un faisceau radio (40) illuminant au moins une partie de ladite région d'intérêt (50),
   - au moins un dispositif récepteur (20) destiné à être positionné pour surveiller ladite région d'intérêt (50).

9. Système radar (90) multi-statique selon la revendication 8 comportant plusieurs dispositifs émetteurs (10) et/ou plusieurs dispositifs récepteurs (20).

10. Système radar (90) selon la revendication 9 comportant plusieurs dispositifs émetteurs (10), dans lequel les différents dispositifs émetteurs (10) sont embarqués dans des satellites (11) organisés en constellations de manière à ce que pour une région d'intérêt (50) quelconque à la surface de la Terre, il existe toujours une ligne de visée directe vers ladite région d'intérêt (50) pour plusieurs desdits satellites (11).

**11.** Système radar (90) selon l'une des revendications 9 à 10 dans lequel le ou les dispositifs émetteurs (10) et/ou le ou les dispositifs récepteurs (20) sont en outre configurés pour communiquer via un réseau de télécommunications par satellite pour échanger des données entre deux dispositifs émetteurs (10), entre deux dispositifs récepteurs (20), entre un dispositif émetteur (10) et un dispositif récepteur (20), entre une station de contrôle (81) au sol et un dispositif émetteur (10), ou entre une station de contrôle (81) au sol et un dispositif récepteur (20).

**12.** Procédé (100) pour la surveillance aérienne à l'aide d'un système radar (90) bi-statique ou multi-statique actif, ledit système radar (90) comportant au moins un dispositif émetteur (10) embarqué dans un satellite (11) en orbite autour de la Terre et au moins un dispositif récepteur (20), ledit au moins un dispositif émetteur (10) étant configuré pour coopérer avec ledit au moins un dispositif récepteur (20), ledit procédé (100) comportant :

- une détermination (101) d'une région d'intérêt (50) dans laquelle on souhaite détecter et géolocaliser un aéronef (30),
- un positionnement (102) dudit dispositif récepteur (20) pour surveiller ladite région d'intérêt (50),
- une communication (103) au dispositif émetteur (10) d'une information relative à ladite région d'intérêt (50),
- une émission (104), par ledit dispositif émetteur (10), d'un signal dans un faisceau radio (40) illuminant au moins une partie de ladite région d'intérêt (50),
- une estimation (105) de la position de l'aéronef (30) dans la région d'intérêt à partir d'un signal (41) reçu par le dispositif récepteur (20) correspondant à la réflexion sur l'aéronef (30) du signal émis par le dispositif émetteur (10).

**13.** Procédé (100) selon la revendication 12 dans lequel, lorsqu'un faisceau radio (40) émis par un dispositif émetteur (10) ne peut pas illuminer entièrement la région d'intérêt (50), le procédé (100) comporte la détermination d'une séquence d'illumination de différentes sous-régions (43) de la région d'intérêt (50) pour ledit dispositif émetteur (10).

**14.** Procédé (100) selon l'une des revendications 12 à 13 dans lequel l'émission (104) du signal radio comporte une combinaison d'un signal parasite avec un signal utile, ledit signal parasite étant décorrélé du signal utile et présentant une fonction d'ambiguïté avec un lobe principal d'une largeur dans le domaine fréquentiel supérieure à deux fois le décalage fréquentiel Doppler maximal susceptible d'être observé pour une cible visée par le système radar.

**15.** Procédé (100) selon l'une des revendications 12 à 14 dans lequel le système radar (90) est un système radar multi-statique comportant un nombre $N_E$ de dispositifs émetteurs (10) et un nombre $N_R$ de dispositifs récepteurs (20), où $N_E$ et $N_R$ sont des entiers naturels positifs, dans lequel un nombre $N_E.N_R$ de configurations bi-statiques disponibles est supérieur ou égal à deux.

**16.** Procédé (100) selon la revendication 15 dans lequel le nombre $N_R$ de dispositifs récepteurs (20) est supérieur ou égal à deux et l'estimation (105) de la position de l'aéronef (30) comporte une mesure de différence de temps d'arrivée du signal reçu par chaque dispositif récepteur (20).

**17.** Procédé (100) selon la revendication 15 dans lequel le nombre $N_E$ de dispositifs émetteurs (10) est supérieur ou égal à deux et l'estimation (105) de la position de l'aéronef (30) pour un dispositif récepteur (20) comprend une détermination d'au moins deux scores de détection associés respectivement à au moins deux dispositifs émetteurs (10), et les scores de détection sont projetés dans une géométrie commune puis cumulés.

**18.** Procédé (100) selon la revendication 15 dans lequel une décision sur l'estimation (105) de la position de l'aéronef (30) repose sur une combinaison de décisions élémentaires correspondant respectivement à différentes configurations bi-statiques parmi les $N_E.N_R$ configurations bi-statiques disponibles.

**19.** Procédé (100) selon l'une des revendications 15 à 18 comportant en outre une organisation des différents satellites (11) embarquant respectivement les différents dispositifs émetteurs (10) en constellations de telle sorte que, pour une région d'intérêt (50) quelconque à la surface de la Terre, il existe toujours une ligne de visée directe vers ladite région d'intérêt (50) pour plusieurs desdits satellites (11).

**20.** Procédé (100) selon l'une des revendications 15 à 19 dans lequel un réseau de télécommunications par satellite permet en outre un échange de données entre deux dispositifs émetteurs (10), entre deux dispositifs récepteurs (20), entre un dispositif émetteur (10) et un dispositif récepteur (20), entre une station de contrôle (81) au sol et un dispositif émetteur (10), ou entre une station de contrôle (81) au sol et un dispositif récepteur (20).

**Patentansprüche**

1. Sendevorrichtung (10) eines bistatischen oder multistatischen Radarsystems (90) für die Luftüberwachung, wobei die Sendevorrichtung (10) dazu ausersehen ist, in einem Satelliten (11) auf der Erdumlaufbahn eingebaut zu werden, **dadurch gekennzeichnet, dass** das Radarsystem (90) ein aktives System ist, wobei die Sendevorrichtung (10) konfiguriert ist, um mit mindestens einer Empfangsvorrichtung (20) zusammenzuwirken, und wenn sich die Sendevorrichtung (10) an Bord des Satelliten (11) auf der Umlaufbahn befindet, die Sendevorrichtung (10) konfiguriert ist, um eine Information bezüglich eines Bereichs von Interesse (50) zu erhalten, der ausersehen ist, um von der mindestens einen Empfangsvorrichtung (20) des Radarsystems (90) überwacht zu werden, und ein Signal in einen Funkstrahl (40) zu senden, der mindestens einen Teil des Bereichs von Interesse (50) beleuchtet.

2. Sendevorrichtung (10) nach Anspruch 1, wobei die Wellenform des gesendeten Signals direkt an Bord des Satelliten (11) autonom erzeugt wird.

3. Sendevorrichtung (10) nach einem der Ansprüche 1 bis 2, wobei, wenn ein Funkstrahl (40), der von der Sendevorrichtung (10) gesendet wurde, den Bereich von Interesse (50) nicht vollständig beleuchten kann, die Sendevorrichtung (10) konfiguriert ist, um verschiedene Unterbereiche (43) des Bereichs von Interesse nacheinander zu beleuchten.

4. Sendevorrichtung (10) nach einem der Ansprüche 1 bis 3, eine Antenne (16) mit phasengesteuertem Netz beinhaltend und ein Strahlformungsnetz (13), das konfiguriert ist, um einen Funkstrahl (40), der von der Sendevorrichtung (10) gesendet wurde, in verschiedene Richtungen umzuleiten.

5. Sendevorrichtung (10) nach einem der Ansprüche 1 bis 4, wobei das gesendete Signal eine Kombination eines Nutzsignals mit einem Störsignal ist, wobei das Störsignal vom Nutzsignal dekorreliert ist und eine Mehrdeutigkeitsfunktion aufweist mit einer Hauptkeule mit einer Breite, die im Frequenzbereich größer ist als das Doppelte der maximalen Doppler-Frequenzverschiebung, die für ein Ziel (30) beobachtet werden kann, das vom Radarsystem (90) anvisiert wird.

6. Sendevorrichtung (10) nach Anspruch 5, wobei das Störsignal ein "Chirp"-Signal ist, das eine Frequenz aufweist, die linear um eine Mittenfrequenz während einer vorbestimmten Periode variiert, mit einer zufälligen Veränderung der Mittenfrequenz von einer Periode zur anderen.

7. Sendevorrichtung (10) nach Anspruch 6, wobei der vom "Chirp"-Signal abgetastete Bandabstand während der vorbestimmten Periode größer ist als das Doppelte der maximalen Doppler-Frequenzverschiebung, die für ein Ziel (30) beobachtet werden kann, das vom Radarsystem (90) anvisiert wird.

8. Aktives bistatisches oder multistatisches Radarsystem (90) zur Luftüberwachung eines Bereichs von Interesse (50), wobei das Radarsystem (90) die Geolokalisation eines Luftfahrzeugs (30) im Bereich von Interesse (50) anvisiert, wobei das Radarsystem (90) umfasst:

   - mindestens eine Sendevorrichtung (10) nach einem der Ansprüche 1 bis 7, wobei jede Sendevorrichtung (10) konfiguriert ist, um ein Signal in einen Funkstrahl (40) zu senden, der mindestens einen Teil des Bereichs von Interesse (50) beleuchtet,
   - mindestens eine Empfangsvorrichtung (20), die ausersehen ist, um zur Überwachung des Bereichs von Interesse (50) positioniert zu werden.

9. Multistatisches Radarsystem (90) nach Anspruch 8, das mehrere Sendevorrichtungen (10) und/oder mehrere Empfangsvorrichtungen (20) beinhaltet.

10. Radarsystem (90) nach Anspruch 9, das mehrere Sendevorrichtungen (10) beinhaltet, wobei die verschiedenen Sendevorrichtungen (10) in Satelliten (11) eingebaut sind, die so in Konstellationen angeordnet sind, dass für einen beliebigen Bereich von Interesse (50) auf der Erdoberfläche immer eine direkte Sichtlinie zum Bereich von Interesse (50) für mehrere der Satelliten (11) vorhanden ist.

11. Radarsystem (90) nach einem der Ansprüche 9 bis 10, wobei die Sendevorrichtung(en) (10) und/oder die Empfangsvorrichtung(en) (20) ferner konfiguriert sind, um über ein Satelliten-Telekommunikationsnetz zum Austausch von Daten zu kommunizieren zwischen zwei Sendevorrichtungen (10), zwischen zwei Empfangsvorrichtungen (20), zwischen einer Sendevorrichtung (10) und einer Empfangsvorrichtung (20), zwischen einer Bodenkontrollstation (81) und einer Sendevorrichtung (10) oder zwischen einer Bodenkontrollstation (81) und einer Empfangsvorrichtung (20) .

12. Verfahren (100) zur Luftüberwachung unter Verwendung eines aktiven bistatischen oder multistatischen Radarsystems (90), wobei das Radarsystem (90) mindestens eine Sendevorrichtung (10) beinhaltet, die in einem Satelliten (11) auf der Erdumlaufbahn eingebaut ist, und mindestens eine Empfangsvorrichtung (20), wobei die mindestens eine Sendevorrichtung (10) konfiguriert ist, um mit der mindestens einen Empfangsvorrichtung (20) zusammenzuwirken, wobei das Verfahren (100) beinhaltet:

- eine Bestimmung (101) eines Bereichs von Interesse (50), in dem ein Luftfahrzeug (30) erfasst und geolokalisiert werden soll,
- eine Positionierung (102) der Empfangsvorrichtung (20) zur Überwachung des Bereichs von Interesse (50),
- eine Kommunikation (103) an die Sendevorrichtung (10) einer Information bezüglich des Bereichs von Interesse (50),
- eine Sendung (104), durch die Sendevorrichtung (10), eines Signals in einen Funkstrahl (40), der mindestens einen Teil des Bereichs von Interesse (50) beleuchtet,
- eine Schätzung (105) der Position des Luftfahrzeugs (30) im Bereich von Interesse ausgehend von einem Signal (41), das von der Empfangsvorrichtung (20) empfangen wurde, das der Reflexion des von der Sendevorrichtung (10) gesendeten Signals am Luftfahrzeug (30) entspricht.

13. Verfahren (100) nach Anspruch 12, wobei, wenn ein Funkstrahl (40), der von einer Sendevorrichtung (10) gesendet wurde, den Bereich von Interesse (50) nicht vollständig beleuchten kann, das Verfahren (100) die Bestimmung einer Abfolge der Beleuchtung verschiedener Unterbereiche (43) des Bereichs von Interesse (50) für die Sendevorrichtung (10) beinhaltet.

14. Verfahren (100) nach einem der Ansprüche 12 bis 13, wobei die Sendung (104) des Funksignals eine Kombination eines Störsignals mit einem Nutzsignal beinhaltet, wobei das Störsignal vom Nutzsignal dekorreliert ist und eine Mehrdeutigkeitsfunktion aufweist mit einer Hauptkeule mit einer Breite, die im Frequenzbereich größer ist als das Doppelte der maximalen Doppler-Frequenzverschiebung, die für ein Ziel beobachtet werden kann, das vom Radarsystem anvisiert wird.

15. Verfahren (100) nach einem der Ansprüche 12 bis 14, wobei das Radarsystem (90) ein multistatisches Radarsystem ist, das eine Anzahl von $N_E$ Sendevorrichtungen (10) und eine Anzahl von $N_R$ Empfangsvorrichtungen (20) beinhaltet, wobei $N_E$ und $N_R$ positive natürliche Zahlen sind, wobei eine Anzahl $N_E.N_R$ von verfügbaren bistatischen Konfigurationen größer oder gleich zwei ist.

16. Verfahren (100) nach Anspruch 15, wobei die Anzahl von $N_R$ Empfangsvorrichtungen (20) größer oder gleich zwei ist, und die Schätzung (105) der Position des Luftfahrzeugs (30) eine Differenzmessung der Ankunftszeit des Signals beinhaltet, das von jeder Empfangsvorrichtung (20) empfangen wird.

17. Verfahren (100) nach Anspruch 15, wobei die Anzahl von $N_E$ Sendevorrichtungen (10) größer oder gleich zwei ist und die Schätzung (105) der Position des Luftfahrzeugs (30) für eine Empfangsvorrichtung (20) eine Bestimmung von mindestens zwei Erfassungswerten umfasst, die jeweils mindestens zwei Sendevorrichtungen (10) zugeordnet sind, und die Erfassungswerte in einer gemeinsamen Geometrie projiziert und dann kumuliert werden.

18. Verfahren (100) nach Anspruch 15, wobei eine Entscheidung über die Schätzung (105) der Position des Luftfahrzeugs (30) auf einer Kombination von elementaren Entscheidungen beruht, die jeweils verschiedenen bistatischen Konfigurationen unter den verfügbaren $N_E.N_R$ bistatischen Konfigurationen entsprechen.

19. Verfahren (100) nach einem der Ansprüche 15 bis 18, das ferner eine Organisation der verschiedenen Satelliten (11) beinhaltet, in die jeweils die verschiedenen Sendevorrichtungen (10) eingebaut sind, in Konstellationen, so dass für einen beliebigen Bereich von Interesse (50) auf der Erdoberfläche immer eine direkte Sichtlinie zum Bereich von Interesse (50) für mehrere der Satelliten (11) vorhanden ist.

20. Verfahren (100) nach einem der Ansprüche 15 bis 19, wobei ein Satelliten-Telekommunikationsnetz ferner einen Datenaustausch ermöglicht zwischen zwei Sendevorrichtungen (10), zwischen zwei Empfangsvorrichtungen (20), zwischen einer Sendevorrichtung (10) und einer Empfangsvorrichtung (20), zwischen einer Bodenkontrollstation (81) und einer Sendevorrichtung (10) oder zwischen einer Bodenkontrollstation (81) und einer Empfangsvorrichtung (20) .

**Claims**

1. A transmitter device (10) of a bi-static or multi-static radar system (90) for aerial surveillance, said transmitter device (10) being intended to be on board a satellite (11) orbiting the Earth, **characterised in that** the radar system (90) is an active system, the transmitter device (10) configured to cooperate with at least one receiver device (20), and when the transmitter device (10) is on board the satellite (11) in orbit, the transmitter device (10) is configured to obtain information relating to a region of interest (50) intended to be monitored by said at least one receiver device (20) of the radar system (90) and to transmit a signal in a radio beam (40) illuminating at least a portion of said region of interest (50).

2. The transmitter device (10) according to claim 1, wherein the waveform of the transmitted signal is generated directly on board the satellite (11) in a standalone manner.

3. The transmitter device (10) according to one of claims 1 to 2, for which, when a radio beam (40) transmitted by the transmitter device (10) cannot completely illuminate the region of interest (50), the transmitter device (10) is configured to successively illuminate different sub-regions (43) of the region of interest.

4. The transmitter device (10) according to one of claims 1 to 3, including a phased array antenna (16) and a beam-forming network (13) configured to repoint a radio beam (40) transmitted by the transmitter device (10) according to different directions.

5. The transmitter device (10) according to one of claims 1 to 4, wherein the transmitted signal is a combination of a useful signal with a parasitic signal, said parasitic signal being decorrelated from the useful signal and having an ambiguity function with a main lobe with a width in the frequency domain greater than twice the maximum Doppler frequency shift likely to be observed for a target (30) aimed at by the radar system (90).

6. The transmitter device (10) according to claim 5, wherein the parasitic signal is a "chirp" signal having a frequency varying linearly around a central frequency during a predetermined period with a random change in the central frequency from one period to another.

7. The transmitter device (10) according to claim 6, wherein the bandwidth swept by the "chirp" signal during said predetermined period is greater than twice the maximum Doppler frequency shift likely to be observed for a target (30) aimed at by the radar system (90).

8. A bi-static or multi-static active radar system (90) for aerial surveillance of a region of interest (50), said radar system (90) aiming at geolocating an aircraft (30) in said region of interest (50), said radar system (90) comprising:

   - at least one transmitter device (10) according to one of claims 1 to 7, each transmitter device (10) being configured to transmit a signal in a radio beam (40) illuminating at least a portion of said region of interest (50),
   - at least one receiver device (20) intended to be positioned to monitor said region of interest (50).

9. The multi-static radar system (90) according to claim 8, including several transmitter devices (10) and/or several receiver devices (20).

10. The radar system (90) according to claim 9, including several transmitter devices (10), wherein the different transmitter devices (10) are on board satellites (11) organised into constellations so that for any region of interest (50) on the Earth's surface, there is always a direct line of sight towards said region of interest (50) for several ones of said satellites (11).

11. The radar system (90) according to one of claims 9 to 10, wherein the transmitter device(s) (10) and/or the receiver device(s) (20) are also configured to communicate via a satellite telecommunication network to exchange data between two transmitter devices (10), between two receiver devices (20), between a transmitter device (10) and a receiver device (20), between a control station (81) on the ground and a transmitter device (10), or between a control station (81) on the ground and a receiver device (20).

**12.** A method (100) for aerial surveillance using a bi-static or multi-static active radar system (90), said radar system (90) including at least one transmitter device (10) on board a satellite (11) orbiting the Earth and at least one receiver device (20), said at least one transmitter device (10) configured to cooperate with said at least one receiver device (20), said method (100) including:

- a determination (101) of a region of interest (50) in which it is desired to detect and geolocate an aircraft (30),
- a positioning (102) of said receiver device (20) to monitor said region of interest (50),
- a communication (103) to the transmitter device (10) of information relating to said region of interest (50),
- a transmission (104), by said transmitter device (10), of a signal in a radio beam (40) illuminating at least a portion of said region of interest (50),
- an estimation (105) of the position of the aircraft (30) in the region of interest based on a signal (41) received by the receiver device (20) corresponding to the reflection on the aircraft (30) of the signal transmitted by the transmitter device (10).

**13.** The method (100) according to claim 12, wherein, when a radio beam (40) transmitted by a transmitter device (10) cannot completely illuminate the region of interest (50), the method (100) includes the determination of a sequence of illumination of different sub-regions (43) of the region of interest (50) for said transmitter device (10).

**14.** The method (100) according to one of claims 12 to 13, wherein the transmission (104) of the radio signal includes a combination of a parasitic signal with a useful signal, said parasitic signal being decorrelated from the useful signal and having an ambiguity function with a main lobe of a width in the frequency domain greater than twice the maximum Doppler frequency shift likely to be observed for a target aimed at by the radar system.

**15.** The method (100) according to one of claims 12 to 14, wherein the radar system (90) is a multi-static radar system including a number $N_E$ of transmitter devices (10) and a number $N_R$ of receiver devices (20), where $N_E$ and $N_R$ are positive natural integers, wherein a number $N_E.N_R$ of available bi-static configurations is greater than or equal to two.

**16.** The method (100) according to claim 15, wherein the number $N_R$ of receiver devices (20) is greater than or equal to two and the estimation (105) of the position of the aircraft (30) includes a measurement of the time difference of arrival of the signal received by each receiver device (20).

**17.** The method (100) according to claim 15, wherein the number $N_E$ of transmitter devices (10) is greater than or equal to two and the estimation (105) of the position of the aircraft (30) for a receiver device (20) comprises a determination of at least two detection scores associated respectively with at least two transmitter devices (10), and the detection scores are projected into a common geometry and then cumulated.

**18.** The method (100) according to claim 15, wherein a decision on the estimation (105) of the position of the aircraft (30) is based on a combination of elementary decisions corresponding respectively to different bi-static configurations among the $N_E.N_R$ available bi-static configurations.

**19.** The method (100) according to one of claims 15 to 18, further including an organisation of the different satellites (11) carrying the different transmitter devices (10) respectively into constellations such that, for any region of interest (50) on the Earth's surface, there is always a direct line of sight towards said region of interest (50) for several ones of said satellites (11).

**20.** The method (100) according to one of claims 15 to 19, wherein a satellite telecommunication network also enables a data exchange between two transmitter devices (10), between two receiver devices (20), between a transmitter device (10) and a receiver device (20), between a control station (81) on the ground and a transmitter device (10), or between a control station (81) on the ground and a receiver device (20).

**Fig. 1**

**Fig. 2**

**Fig. 3**

**Fig. 4**

**Fig. 5**

**Fig. 6**

231

232

s(t)

$\exp(i2\pi f_0 n/f_s$

$\exp(i2\pi f_1 n/f_s$

$\exp(i2\pi f_{Nc} n/f_s$

$z^{-1}$   $z^{-1}$   $z^{-1}$

$w_1$   $w_2$   $w_K$

232

232

233

+

+

+

$\Sigma$+

x[n]   y[n]

$\Sigma$-

**Fig. 7**

Fréquence spatiale

Fréquence Doppler

Distance/temps

237

236

235

234

**Fig. 8**

**Fig. 9**

**Fig. 10**

**Fig. 11**

**a)**

**b)**

$(d_2 - d_{LOS2})/c$ $\qquad$ $(d_1 - d_{LOS1})/c$

**c)**

**Fig. 12**

**Fig. 13**

**Fig. 14**

Fig. 15

**Fig. 16**

Fig. 17

Fig. 18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019073230 A1